# EUROPÄISCHE PATENTANMELDUNG

(11) **EP 4 537 672 A1**
(43) Veröffentlichungstag der Anmeldung: **16.04.2025**
(21) Anmeldenummer: 23203005.6
(22) Anmeldetag: 11.10.2023
(51) Int. Cl.: A23J 1/00, A23J 1/12, A23J 3/14, A23K 10/30, A23L 5/20, A23L 7/10, C09J 189/00

(54) **VERFAHREN ZUR HERSTELLUNG EINES PFLANZENBASIERTEN KLEBERS MIT REDUZIERTEM T2/HT2-GEHALT**

(71) Anmelder: Agrana Beteiligungs- Aktiengesellschaft, 1020 Wien (AT)
(72) Erfinder: Die Erfindernennung liegt noch nicht vor
(74) Vertreter: SONN Patentanwälte GmbH & Co KG

(57) **Zusammenfassung**

Die Erfindung betrifft ein Verfahren zur Herstellung eines pflanzenbasierten Klebers mit einem reduzierten Gehalt an T-2-Toxin (T2) und/oder HT-2-Toxin (HT2), umfassend die Schritte: (a) Bereitstellung eines Ausgangsmaterials, das T2 und/oder HT2 enthält, (b) alkalische Behandlung des Ausgangsmaterials bei einem pH-Wert von 9,0 oder darüber, wobei der Gehalt an T2 und/oder HT2 um 50 Gew% oder mehr reduziert wird, (c) Einstellung des pH-Werts des alkalisch behandelten Ausgangsmaterials auf 7,5 oder darunter, und (d) Fertigstellung des pflanzenbasierten Klebers. Die Erfindung betrifft auch einen pflanzenbasierten Kleber, erhältlich durch dieses Verfahren, einen Gehalt an T2 und/oder HT2 von 500 ppb oder darunter, und eine Stickstofflöslichkeit von 1,0 Gew% oder darüber, sowie die Verwendung des pflanzenbasierten Klebers in der Futtermittelindustrie und/oder in der Nahrungsmittelindustrie.

## Beschreibung

Die vorliegende Erfindung betrifft ein Verfahren zur Herstellung eines pflanzenbasierten Klebers. Weiters betrifft die Erfindung einen pflanzenbasierten Kleber.

Mykotoxine sind sekundäre Stoffwechselprodukte aus Schimmelpilzen, die in verschiedenen Nahrungsmitteln, aber auch in Futtermitteln für Tiere vorkommen können. Es gibt verschiedene Mykotoxine, darunter Mykotoxine der Aflatoxin-Gruppe, der Fumonisin-Gruppe, Deoxynivalenol, Ochratoxin A, HT-2-Toxin (HT2), T-2-Toxin (T2) und Zearalenon, wobei T2 und HT2 von besonderer Bedeutung in der Futtermittelindustrie sind. Mykotoxine können bereits in geringen Mengen giftig wirken und zu verschiedenen gesundheitlichen Problemen führen. Aufgrund dessen wurden Höchstgehalte für Mykotoxine festgesetzt, beispielsweise in der Verordnung (EG) Nr. 1881/2006 der Kommission vom 19. Dezember 2006. Auch die Futtermittelindustrie verlangt hohe Standards. Dementsprechend besteht ein Bestreben darin, den Mykotoxingehalt in Nahrungsmitteln und Futtermitteln zu reduzieren und es sind für diese Zwecke zahlreiche Methoden aus dem Stand der Technik bekannt.

Die US 4,035,518 A beschreibt ein Verfahren, in welchem mit Aflatoxin kontaminierte Erdnüsse farblich kenntlich gemacht werden, um nachfolgend eine Trennung von nicht kontaminierten Erdnüssen anhand der Farbe durchzuführen. Dabei werden die Erdnüsse für 5 bis 15 min bei 180 bis 213 °F (82,2 bis 100,6 °C) einer schwach alkalischen Lösung ausgesetzt und anschließend mit Wasser oder einer sauren Lösung bis zur pH-Neutralität gewaschen. Beim Waschen färben sich die kontaminierten Erdnüsse dunkelbraun, während die nicht kontaminierte Erdnüsse eine helle Farbe beibehalten.

Weiters werden Verfahren verwendet, um den Mykotoxingehalt nach der Aufnahme kontaminierter Nahrungsmittel durch Metabolisierung zu verringern. Beispielsweise werden in der WO 03/053161 A1 Mikroorganismen zur biologischen Entgiftung von Mykotoxinen in Futtermitteln eingesetzt. Die EP 2 279 787 A1 betrifft ein Adsorptionsmittel basierend auf einem organischen, amorphen Silikat und Dodecylamin und dessen Verwendung in Futtermitteln zur Adsorption von Mykotoxinen. In der US 2010/0189856 A1 wird eine Methode zur Adsorption von Mykotoxinen in Futter für Tiere beschrieben, wobei dem Futter eine Kombination aus modifiziertem, pflanzlichem Lignopolysaccharidmaterial und Mykotoxin-bindenden Komponenten zugesetzt wird. Die US 2018/0074056 A1 und die US 2020/0191786 A1 betreffen wässrige Zusammensetzungen, die Cyclodextrine oder Kohlenhydrate enthalten, zur Bindung und Entfernung von Mykotoxinen aus Lebensmitteln.

Auch kann der Mykotoxingehalt von Nahrungsmitteln bereits im Vorfeld (d.h. vor der Nahrungsaufnahme) reduziert werden. Zahlreiche Veröffentlichung betreffend die Reduzierung des Mykotoxingehalts mittels Nixtamalisierung. Dies ist ein seit mehreren Jahrtausenden bekanntes und insbesondere in Südamerika übliches Verfahren, um in Getreide, insbesondere Mais, enthaltenes Eiweiß besser verdaulich zu machen. Dabei wird das Getreide in einer alkalischen Lösung, normalerweise unter Verwendung von Kalk (Calciumhydroxid), eingeweicht und gekocht. Méndez-Albores J. A. et al. (Sci. Food Agric. 84, 1611-1614, 2004) analysierten die Wirksamkeit der Entgiftung von Mais durch Nixtamalisierung und stellten einen Rückgang des Aflatoxingehalts in Tortillas fest, jedoch auch eine Neubildung des Aflatoxins bei einer nachfolgenden Ansäuerung. Hahn I. et al. (Food and Chemical Toxicology, 76, 11-18, 2015) fanden, dass eine alkalische Verarbeitung, etwa eine Nixtamalisierung, von Mais zur Entstehung von teilweise und vollständig hydrolysiertem Fumonisin B1, und folglich zu einer geringeren Toxizität, führt. Elias-Orozco R. et al. (Food Additives and Contaminants, 19(9), 878-885, 2002) stellten fest, dass der Aflatoxingehalt von Maistortillas nicht nur durch Nixtamalisierung, sondern auch durch ein Extrusionsverfahren unter Verwendung von Kalk und Wasserstoffperoxid reduziert werden kann. Schaarschmidt S. und Fauhl-Hassek C. (Toxins, 11, 227, 2019) beschreiben, dass Mykotoxine durch einen hohen pH-Wert und/oder hohe Temperaturen abgebaut oder modifiziert werden können. Sie führen an, dass der Mykotoxingehalt, insbesondere der Aflatoxingehalt, in alkalisch gekochtem Mais und in Tortillas reduziert sein kann, dass sich aber die Verringerung von Aflatoxinen während der Nixtamalisierung unter sauren Bedingungen teilweise umkehren kann. Torres P. et al. (J. Agric. Food Chem., 49, 2825-2829, 2001) führten Nixtamalisierungsverfahren durch und stellten fest, dass durch Kochen von Mais bei einem pH-Wert von 10,2 bis 10,7 der Aflatoxingehalt reduziert werden konnte. Hendrich S. et al. (J. Agric. Food Chem., 41, 1649-1654, 1993) fanden eine Abnahme des Gehalts an Fumonisin B1 in Mais nach einer Nixtamalisierung. Abbas H. K. et al. (Cereal Chem., 65(1), 15-19, 1988) verwendeten kalkhaltiges Wasser, um Mais zu kochen, und fanden eine Abnahme von Zeralenon und Deoxynivalenol.

Abgesehen von der Nixtamalisierung finden sich weitere Methoden zur Verringerung des Mykotoxingehalts im Stand der Technik. Ryu D. et al. (Stewart Postharvest Review, 6(5), 2008) fanden, dass Extrusionskochen von Lebensmitteln oberhalb von 150 °C deren Mykotoxingehalt signifikant reduzieren kann. Insbesondere Fumonisine können in Gegenwart eines reduzierenden Zuckers, z.B. Glukose, deutlich reduziert werden. Park D. et al. (J. Assoc. Off. Anal. Chem., 71(4), 685-703) beschäftigten sich mit der Verwendung von Ammoniak zur Entfernung von Aflatoxinen aus Tierfuttermitteln. Colovic R. et al. (Toxins, 11, 617, 2019) untersuchten Verfahren zur Verringerung des Gehalts an Mykotoxinen von Futtermitteln. Müller H.-M. (Übers. Tierernährg., 11, 47-80, 1983) beschreibt einen Abbau von Aflatoxin B1 im alkalischen Bereich. Karlovsky P. et al. (Mycotoxin Res., 32, 179-205, 2016) behandeln in ihrem Review die physikalische Entfernung von Mykotoxinen sowie die Dekontaminierung durch chemische oder enzymatische Umwandlung von Mykotoxinen in weniger toxische Produkte. Pinton P. et al. (Pratical Guidance to Mitigation of Mycotoxins During Food Processing, International Life Sciences Institute Europe, August 2019) geben einen Überblick über Verfahren zur Verarbeitung verschiedener Lebensmittel, um deren Mykotoxingehalt zu verringern.

In der EP 2 491 794 A1 wird ein Maisproteinkonzentrat offenbart, das mindestens etwa 80% Protein auf Trockengewichtsbasis enthält. Fett kann durch Filtration aus dem Proteinkonzentrat entfernt werden, wobei die Temperatur bei der Filtration bei mehr als 45 °C liegen kann, sodass das mikrobielle Wachstum und die Mykotoxinkonzentration während des Filterprozesses kontrolliert werden können. Die US 2001/0009040 A1 betrifft Verfahren zur Identifizierung von Organismen, mit welchen Enzyme und Gene isoliert werden können, die für die Entstehung einer Fumonisin-Resistenz verantwortlich sind. Hierdurch kann eine transgene Pflanze mit der Fähigkeit zum Abbau von Fumonisin hergestellt werden.

In der EP 3 273 236 A1 wird ein Verfahren zur Extraktion von Mykotoxinen aus Getreiden und anderen Lebensmitteln oder Futtermitteln und deren anschließende Quantifizierung beschrieben. Die Mykotoxine werden dabei mit gepufferten Lösungen von Naphthyl- und/oder Phenylverbindungen und/oder deren heterozyklischen Analoga, die wenigstens eine Sulfonsäure- bzw. Carbonsäuregruppe tragen, extrahiert. In der EP 3 154 373 A1 wird ein Verfahren zum Extrahieren von Schadstoffen, etwa Mykotoxinen, aus einem Tierfuttermittel beschrieben, wobei das Tierfuttermittel mit einem Lösungsmittel, welches die Schadstoffe lösen kann, und mit einem Extraktionspuffer kontaktiert wird.

In der WO 92/16116 A1 wird ein Verfahren beschrieben, in welchem Getreide oder Samen bei einer Temperatur von zwischen 12 und 50 °C einer Ultraschallbehandlung in einer wässrigen Suspension unterzogen werden, wodurch der Mykotoxingehalt verringert werden kann. In der WO 2017/058501 A1 wird ein Verfahren offenbart, mit welchen Mykotoxine aus unlöslichem Pflanzenprotein unter Verwendung von Partikelseparatoren auf Dichtebasis entfernt werden, das insbesondere zur Entfernung von Aflatoxinen aus Maismehlprotein geeignet ist.

Die WO 2017/081347 A2 beschreibt ein Verfahren zur Reduzierung anorganischer (Schwermetalle) und organischer (Aflatoxine, etc.) Verunreinigungen in proteinreichen, pflanzlichen Stoffen, die hauptsächlich aus Reis stammen. Dabei wird das Ausgangspflanzenmaterial mit Wasser und einem Proteaseenzym gemischt, die Mischung wird auf einen pH-Wert zwischen 3 und 10 gebracht und mindestens 20 min bei einer Temperatur von zwischen 20 und 90 °C gerührt. In der US 2009/0053357 A1 werden Futterergänzungsmittel auf Maisbasis beschrieben, die mit einem System hergestellt werden, welches das Risiko der Mykotoxinentwicklung verringert. Die WO 2009/080701 A1 beschreibt ein Verfahren umfassend die Behandlung mit Cutinase zur Entgiftung von Futtermitteln, die mit Zearalenon kontaminiert sind.

Die DE 10 2008 002 013 A1 offenbart ein Verfahren zur Detoxifikation von mit Mykotoxinen kontaminierten, pflanzlichen Ernteprodukten, wobei die Ernteprodukte mit einer Zubereitung auf Basis von monosubstituierten Aminverbindungen und Schwefeldioxid oder einer von Schwefeldioxid abgeleiteten Sauerstoffsäure oder deren Salzen behandelt werden.

Die US 5,082,679 A betrifft ein Verfahren zur Entgiftung eines mit Aflatoxin kontaminierten, landwirtschaftlichen Produkts. Dieses wird einem Benetzungsmittel ausgesetzt, das einen pH-Wert im Bereich von 7 bis 13 hat. Anschließend wird das Produkt einem Entgiftungsmittel, insbesondere Ammoniak, ausgesetzt.

Die EP 1 568 277 A1 offenbart ein Verfahren zur Hemmung einer Mykotoxinkontamination in Cerealien, wobei die Cerealien mit einer Zusammensetzung behandelt werden, die eine oder mehrere Verbindungen aus der Gruppe bestehend aus Ammoniumsalzen, primären bis quartären Ammoniumsalzen, Alkalimetallsalzen, Erdalkalimetallsalzen und mehrwertigen Metallsalzen enthält.

In der WO 2018/237030 A1 wird ein Verfahren zur Reduzierung von Fumonisin in einem Maisproteinprodukt durch Einstellen des pH-Werts auf einen Bereich zwischen 5,75 und 7,5 beschrieben. Das Verfahren kann auch die Zugabe eines zweiwertigen, kationischen Salzes umfassen.

In der EP 3 400 806 A1 wird ein Verfahren beschrieben, um organische Verunreinigungen, etwa Aflatoxine, in einem pflanzlichen Stoff zu verringern. Der pflanzliche Stoff wird dabei in Gegenwart von Wasser mit Wasserstoffperoxid gemischt, auf einen pH-Wert von über 9,0 gebracht und für mindestens 20 min bei einer Temperatur von 75 bis 95 °C gehalten. Das Wasserstoffperoxid wird nachfolgend wieder vom pflanzlichen Stoff abgetrennt.

In der DE 2406797 A1 wird ein Verfahren zum Verringern des Aflatoxin-Gehalts eines landwirtschaftlichen Produkts, das weniger als 10% Fettsubstanzen enthält, beschrieben. Das Produkt wird zerkleinert und mit 10 bis 40 Gew% Wasser vermischt. Weiters wird ein Oxid und/oder ein Hydroxid eines Alkali- oder Erdalkalimetalls zugegeben, um den pH-Wert auf mindestens 8,0 zu erhöhen. Auch 0,1 bis 0,6 Gew% eines organischen Amins wird hinzugefügt, um den pH-Wert mindestens auf 9,5 zu erhöhen. Die erhaltene Mischung wird für eine zur Verringerung des Aflatoxin-Gehalts auf unter 100 ppb erforderliche Zeit bei einer Temperatur von unter 150 °C gehalten. Durch Zugabe einer Säure wird der pH-Wert anschließend auf unter 7,0 eingestellt, und das entgiftete Produkt wird getrocknet, wobei das Amin durch Verdampfung abgetrennt wird.

Pflanzenbasierte Kleber sind ein wichtiger Bestandteil in der Futtermittelindustrie und gewinnen immer mehr Bedeutung auch in der Nahrungsmittelindustrie (d.h. Lebensmittelindustrie), wenn es um die Herstellung und Verfeinerung von Lebensmitteln für die menschliche Ernährung geht. Da pflanzenbasierte Kleber jedoch häufig mit Mykotoxinen, insbesondere mit T2 und/oder HT2, kontaminiert sind, ist die Verwendung solcher Kleber in der Nahrungs- und Futtermittelindustrie aber problematisch. Die im Stand der Technik bekannten Verfahren, die auf die Reduzierung des Mykotoxingehalts vor der Nahrungsmittelaufnahme abzielen, setzen zumeist Wasserstoffperoxid, Amine oder Ammoniak als Entgiftungsmittel ein. Aufgrund der Eigenschaften dieser Substanzen (unter anderem Neigung zur spontanen Zersetzung, Gefahr von Verätzungen) resultiert dies allerdings in einer komplexen Prozessführung und erfordert besondere sicherheitstechnische Maßnahmen, wodurch in weiterer Folge auch die Verfahrenskosten relativ hoch sind. Daher besteht ein Bedarf an einem einfacheren, effizienten Verfahren, um einen pflanzenbasierten Kleber mit einem reduzierten Gehalt an T2 und/oder HT2 herzustellen, sodass dessen Verwendung in der Futtermittelindustrie, aber auch in der Nahrungsmittelindustrie, zulässig und ohne gesundheitliche Risiken möglich ist. Es ist eine Aufgabe der gegenständlichen Erfindung, ein solches Verfahren zur Verfügung zu stellen.

Die Erfindung betrifft ein Verfahren zur Herstellung eines pflanzenbasierten Klebers mit einem reduzierten Gehalt an T-2-Toxin (T2) und/oder HT-2-Toxin (HT2), umfassend die Schritte:
(a) Bereitstellung eines Ausgangsmaterials, das T2 und/oder HT2 enthält,
(b) alkalische Behandlung des Ausgangsmaterials bei einem pH-Wert von 9,0 oder darüber, wobei der Gehalt an T2 und/oder HT2 um 50 Gew% oder mehr reduziert wird,
(c) Einstellung des pH-Werts des alkalisch behandelten Ausgangsmaterials auf 7,5 oder darunter, und
(d) Fertigstellung des pflanzenbasierten Klebers.

Überraschenderweise kann mit diesem Verfahren durch eine einfache Prozessführung und ohne aufwändige sicherheitstechnische Maßnahmen ein gesundheitlich unbedenklicher pflanzenbasierter Kleber mit einem um zumindest 50 Gew% reduzierten Gehalt an T2 und/oder HT2 erhalten werden, der sich für den Einsatz in der Futtermittelindustrie (insbesondere für die Jungtier- und Haustierfütterung), aber auch in der Nahrungsmittelindustrie eignet. Die Reduktion ist dabei auf den Gehalt an T2 und/oder HT2 bezogen, der im bereitgestellten Ausgangsmaterial (Trockenmasse) enthalten ist. Wenn das Ausgangsmaterial sowohl T2 als auch HT2 enthält, ist die Reduktion von 50 Gew% als die Summe der Reduktion des Gehalts von T2 und HT2 zu verstehen.

Das bereitgestellte Ausgangsmaterial kann, abgesehen von T2 und/oder HT2, ein weiteres Mykotoxin ausgewählt aus der Gruppe bestehend aus Fusarien-Toxinen, Ochratoxinen, Aflatoxinen, oder einer Kombination davon enthalten. Die Fusarien-Toxine umfassen A- und B-Trichothecene (z.B. Deoxynivalenol (DON), Nivalenol (NIV), T2, HT2), Zearalenon (ZON), Fumonisine, Moniliformin, Fusarin C und Fusarinsäure (FA). Das weitere Mykotoxin kann ausgewählt sein aus der Gruppe bestehend aus Deoxynivalenol, Zearalenon, Ochratoxin A (OTA), Aflatoxinen, Fumonisinen, oder einer Kombination davon. Das Aflatoxin kann Aflatoxin B1 (AFLA B1), Aflatoxin B2 (AFLA B2), Aflatoxin G1 (AFLA G1) und/oder Aflatoxin G2 (AFLA G2) sein. Das Fumonisin kann Fumonisin B1 (FUM B1), Fumonisin B2 (FUM B2) und/oder Fumonisin B3 (FUM B3) sein. Vorzugsweise ist das weitere Mykotoxin Deoxynivalenol, Zearalenon und/oder Aflatoxin B1. Mit dem erfindungsgemäßen Verfahren kann überraschenderweise auch der Gehalt des weiteren Mykotoxins (bzw. der Gehalt einer Kombination aus zwei oder mehr weiteren Mykotoxinen) signifikant reduziert werden, was das Einsatzgebiet des mit dem Verfahren erhaltenen, pflanzenbasierten Klebers verbreitern kann. Vorzugsweise wird der Gehalt des weiteren Mykotoxins (bzw. der weiteren Mykotoxine) in Schritt (b) um 30 Gew% oder mehr reduziert, vorzugsweise um 40 Gew% oder mehr, bevorzugter um 50 Gew% oder mehr, noch bevorzugter um 60 Gew% oder mehr. Diese Reduktion ist dabei auf den Gehalt des weiteren Mykotoxins im bereitgestellten Ausgangsmaterial bezogen. Die Reduktion kann unter anderem von der Löslichkeit des jeweiligen Mykotoxins im Maiskleber abhängig sein. Wenn das Ausgangsmaterial zwei oder mehr weitere Myktoxine enthält, ist die Reduktion als die Summe der Reduktion des Gehalts dieser zwei oder mehr weiteren Mykotoxine zu verstehen.

Das bereitgestellte Ausgangsmaterial kann einen Vorläufer des pflanzenbasierten Klebers mit einem vergleichsweise hohen Gehalt an T2 und/oder HT2 umfassen, beispielsweise ein Getreide, ein getreidehaltiges Mehl und/oder einen pflanzenbasierten, insbesondere getreidebasierten, Kleber mit einem vergleichsweise hohen Gehalt an T2 und/oder HT2 (z.B. 600 ppb oder darüber, oder 800 ppb oder darüber). Vorzugsweise weist das Ausgangsmaterial einen Proteingehalt von 40 Gew% oder darüber auf, vorzugsweise von 50 Gew% oder darüber, bevorzugter von 55 Gew% oder darüber, bezogen auf das Gesamtgewicht des Ausgangsmaterials. Somit kann das Ausgangsmaterial als Proteinlieferant dienen. Das bereitgestellte Ausgangsmaterial kann pulverförmig sein. Dann kann es einfach gehandhabt und dosiert werden.

Der pflanzenbasierte Kleber umfasst vorzugsweise einen Getreidekleber. Der Getreidekleber kann ein Maiskleber, ein Weizenkleber, ein Gerstenkleber, ein Haferkleber, ein Roggenkleber oder eine Mischung davon sein. Bevorzugt umfasst der pflanzenbasierte Kleber einen Maiskleber, noch bevorzugter ist der pflanzenbasierte Kleber ein Maiskleber. Maiskleber ist aufgrund seines hohen Anteils an Proteinen, Kohlenhydraten und Vitaminen ein wichtiger Bestandteil in der Futtermittelindustrie und in der Nahrungsmittelindustrie. Da Maiskleber häufig HT2 und/oder T2 enthält, kann er durch das erfindungsgemäße Verfahren für die Futter- und Nahrungsmittelindustrie verwendungsfähig gemacht werden. Der Maiskleber kann ein Nebenprodukt eines Verfahrens zur Herstellung von Stärke aus Mais, Wachsmais, Amylomais und/oder anderen Maishybriden sein. Dadurch wird eine effizientere Nutzung von Maispflanzen ermöglicht, was die Nachhaltigkeit erhöht.

In Schritt (b) des Verfahrens wird das Ausgangsmaterial bei einem pH-Wert von 9,0 oder darüber alkalisch behandelt, wobei der Gehalt an T2 und/oder HT2 des Ausgangsmaterials um 50 Gew% oder mehr reduziert wird. Die alkalische Behandlung kann kontinuierlich oder batchweise durchgeführt werden.

Mit der mit der vorliegenden Erfindung zur Verfügung gestellten Lehre wird es der Fachperson ermöglicht, ein einfaches Abreicherungsverfahren für T2 und/oder HT2 in einem pflanzenbasierten Kleber, insbesondere in einem Maiskleber, durch Verwendung eines Alkalisierungsschrittes auch industriell zu etablieren, um so entweder T2 und/oder HT2 in einem Ausgangsmaterial mit einem bestimmten Gehalt an T2 und/oder HT2 abzureichern oder aber für ein Ausgangsmaterial mit unbekannter Belastung an T2 und/oder HT2 eine sichere Abreicherung dieser Mykotoxine im Herstellungsverfahren vorzusehen, indem beispielsweise Bedingungen gewählt werden, mit denen sogar theoretische Höchstgrenzen an T2 und/oder HT2 sicher abgereinigt werden können. Beispielsweise ist es möglich, geringe Mengen an T2 und/oder HT2 bereits mit einer sehr sanften alkalischen Behandlung (z.B. bei einem pH-Wert von 9,0) unter einen bestimmten Grenzwert zu bringen. Es ist aber auch möglich, den Gehalt an T2 und/oder HT2 im Wesentlichen vollständig zu entfernen, indem z.B. bei einem pH-Wert von 11,0 oder darüber, und/oder bei einer Temperatur von 50 °C oder darüber (insbesondere z.B. bei einer Temperatur von 90 °C), und/oder bei einer Behandlungsdauer von 30 min oder darüber, insbesondere von 1,5 h bis 3 h, alkalisch behandelt wird. Wenn man diese drastischeren alkalischen Behandlungsvarianten vorsieht, kann man erfindungsgemäß - sogar bei unbekannter Belastung des Ausgangsmaterials an T2 und/oder HT2 - sicherstellen, dass im finalen Produkt im Wesentlichen 100 Gew% einer allfälligen Belastung mit T2 und/oder HT2 entfernt worden sind. Mit der vor allem im Beispielteil systematisch dargestellten Lehre über die einzelnen Reaktionsparameter im Rahmen des erfindungsgemäßen Alkalisierungsschrittes (insbesondere pH-Wert, Temperatur) können im Einzelfall die für die jeweilige Fragestellung und das jeweilige Ausgangsmaterial angemessenen Reaktionsbedingungen für den Alkalisierungsschritt optimal eingestellt werden, selbst wenn im Vorfeld keine analytische Bestimmung des Ausgangsmaterials hinsichtlich des genauen Gehaltes an T2 und/oder HT2 erfolgt, sondern nur von durchschnittlichen Werten beim Gehalt an T2 und/oder HT2 oder überhaupt von einer theoretischen Maximalbelastung ausgegangen wird.

Vorzugsweise wird der Gehalt an T2 und/oder HT2 in Schritt (b) um 60 Gew% oder mehr reduziert, bevorzugter um 70 Gew% oder mehr, noch bevorzugter um 80 Gew% oder mehr, noch bevorzugter um 90 Gew% oder mehr, besonders bevorzugt um 95 Gew% oder mehr. Mit dem erfindungsgemäßen Verfahren kann demgemäß ein pflanzenbasierter Kleber mit einem erheblich reduzierten Gehalt an T2 und/oder HT2 erhalten werden, sodass dieser ohne gesundheitliche Bedenken in der Nahrungsmittelindustrie verwendet werden kann.

Das Ausgangsmaterial kann in Schritt (b) in einer Mischung mit einer Flüssigkeit, insbesondere Wasser, vorliegen. Die Mischung kann das Ausgangsmaterial in einer Menge von 8 bis 14 Gew% umfassen, vorzugsweise von 10 bis 12 Gew%, bezogen auf das Gesamtgewicht der Mischung. Dadurch kann eine gute Verfahrenseffizienz erreicht werden, da sich eine gute Homogenität der Mischung erreichen lässt und nachfolgend auch die Fertigstellung des pflanzenbasierten Klebers effizient ausgestaltet werden kann; beispielsweise kann eine nachfolgend abzutrennende Menge an Flüssigkeit geringgehalten werden. Wenn das Ausgangsmaterial ein Nebenprodukt eines Verfahrens zur Herstellung von Stärke ist, kann es im nassen bzw. feuchten Zustand ohne eine vorhergehende Trocknung weiterbehandelt werden. Je nachdem, welchen Flüssigkeitsgehalt, insbesondere Wassergehalt, das Ausgangsmaterial aufweist, kann gegebenenfalls vor oder in Schritt (b) eine entsprechende Menge an Flüssigkeit hinzugefügt werden, um die Verfahrenseffizienz zu verbessern.

Der in Schritt (b) verwendete pH-Wert kann mit einer Base eingestellt werden. Die Base kann ein Alkalimetallsalz und/oder ein Erdalkalimetallsalz sein, vorzugsweise ein Hydroxid, ein Carbonat und/oder ein Hydrogencarbonat. Besonders bevorzugt ist die Base ausgewählt aus Natriumhydroxid, Natriumcarbonat, Natriumhydrogencarbonat oder einer Kombination davon. Hiermit kann der pH-Wert effektiv und schnell eingestellt werden. Bei der Verwendung von Natriumhydroxid, Natriumcarbonat, und/oder Natriumhydrogencarbonat kann (bei entsprechender Auswahl anderer im Verfahren verwendeter Substanzen bzw. Rohstoffe) ein biologischer, pflanzenbasierter Kleber erhalten werden, was die Nachhaltigkeit weiter verbessert. Unter einem biologischen, pflanzenbasierten Kleber wird ein Kleber verstanden, der bei ausschließlicher Verwendung von Rohstoffen bzw. Substanzen aus ökologischer bzw. biologischer Produktion erhalten wird. Unter der ökologischen bzw. biologischen Produktion wird insbesondere die Anwendung von Produktionsverfahren nach den Vorschriften der Verordnung (EU) 2018/848 des Europäischen Parlaments und des Rates vom 30. Mai 2018 auf allen Stufen der Produktion, der Aufbereitung und des Vertriebs verstanden.

Bevorzugt ist es, wenn die Base in Wasser gelöst ist. Vorzugsweise umfasst die Lösung der Base in Wasser 10 bis 70 Gew% der Base, bevorzugter 40 bis 60 Gew%, bezogen auf das Gesamtgewicht der Lösung. Dann wird eine genauere Dosierung ermöglicht und kann der in Schritt (b) verwendete pH-Wert exakt eingestellt werden.

Gemäß einer bevorzugten Ausführungsform kann das Ausgangsmaterial in Schritt (b) bei einem pH-Wert von 9,5 oder darüber alkalisch behandelt werden, vorzugweise von 10,0 oder darüber, noch bevorzugter von 10,5 oder darüber. Vorzugsweise wird das Ausgangsmaterial bei einem pH-Wert im Bereich von 9,0 bis 12,0 alkalisch behandelt, bevorzugter von 10,0 bis 12,0, noch bevorzugter von 10,0 bis 11,0. Hierdurch kann eine gute und effiziente Reduzierung des Gehalts an T2 und/oder HT2 erreicht werden.

Gemäß einer weiteren bevorzugten Ausführungsform kann das Ausgangsmaterial in Schritt (b) bei einer Temperatur von 40 °C oder darüber alkalisch behandelt werden, vorzugsweise bei 45 °C oder darüber, bevorzugter von 50 °C oder darüber. Durch Erhöhung der Temperatur kann die Reaktionsgeschwindigkeit erhöht werden, sodass innerhalb einer bestimmten Zeit eine vergleichsweise hohe Reduzierung des Gehalts an T2 und/oder HT2 erfolgen kann. Vorzugsweise wird das Ausgangsmaterial bei einer Temperatur von 40 bis 95 °C alkalisch behandelt, bevorzugter von 40 bis 75 °C, noch bevorzugter von 45 bis 65 °C, am bevorzugtesten von 50 bis 60 °C. Dann kann eine gute Balance zwischen Verfahrenseffizienz und Verfahrensökonomie erreicht werden.

Gemäß einer weiteren bevorzugten Ausführungsform kann das Ausgangsmaterial in Schritt (b) für mindestens 5 min alkalisch behandelt werden, vorzugsweise für mindestens 10 min, bevorzugter für mindestens 15 min, noch bevorzugter für mindestens 20 min, noch bevorzugter für mindestens 30 min, noch bevorzugter für mindestens 1,0 h, noch bevorzugter für mindestens 1,5 h. Je länger das Ausgangsmaterial alkalisch behandelt wird, umso höher kann die Reduzierung des Gehalts an T2 und/oder HT2 sein. Dabei ist eine Behandlung des alkalischen Ausgangsmaterials in Schritt (b) für mindestens 30 min besonders bevorzugt. Hierdurch lässt sich bereits eine signifikante Reduzierung des Gehalts an T2 und/oder HT2 erreichen. Bevorzugt wird das Ausgangsmaterial in Schritt (b) für 30 min bis 10,0 h alkalisch behandelt, bevorzugter für 1,0 bis 6,0 h, noch bevorzugter für 1,0 bis 3,5 h. Bei einer alkalischen Behandlung für die genannte Zeitdauer kann der Gehalt an T2 und/oder HT2 erheblich reduziert werden, und kann damit zugleich eine gute Verfahrensökonomie einhergehen.

Die Viskosität des Ausgangsmaterials in Schritt (b) liegt bei 25 °C vorzugsweise bei 1000 mPas oder darunter, bevorzugter bei 850 mPas oder darunter, noch bevorzugter bei 750 mPas oder darunter, noch bevorzugter bei 650 mPas oder darunter; bevorzugt im Bereich von 100 bis 850 mPas, bevorzugter von 250 bis 650 mPas. Das Ausgangsmaterial ist dann gut verarbeitbar, insbesondere gut homogenisierbar.

Das Ausgangsmaterial kann in Schritt (b) unter Rühren alkalisch behandelt werden. Gerührt kann insbesondere dann werden, wenn das Ausgangsmaterial in Schritt (b) in einer Mischung mit einer Flüssigkeit, insbesondere Wasser, vorliegt. Dadurch kann die Homogenität des Ausgangsmaterials erhöht werden, und folglich die Effizienz der alkalischen Behandlung verbessert werden. Auch kann durch das Rühren eine Sedimentation des Ausgangsmaterials verhindert werden.

Vorzugsweise wird das Ausgangsmaterial bei der alkalischen Behandlung mit einer Rotationsgeschwindigkeit im Bereich von 50 bis 400 UpM gerührt, bevorzugter von 100 bis 200 UpM. Hierdurch kann das Ausgangsmaterial gut homogenisiert werden und eine Sedimentation des Ausgangsmaterials kann vermieden werden. Gleichzeitig kann auch eine Beschädigung oder Zerstörung der Struktur des Ausgangsmaterials vermieden werden (die bei einer hohen Rotationsgeschwindigkeit auftreten könnte), da dies zu einer Veränderung physikalischer und/oder chemischer Eigenschaften des Ausgangsmaterials führen könnte, etwa zu Veränderungen in dessen Konsistenz und/oder Viskosität. Die tatsächliche Rotationsgeschwindigkeit kann unter anderem von der Größe des jeweiligen Behälters und/oder dem verwendeten Rührer (z.B. Größe, Geometrie) abhängen.

In Schritt (c) wird der pH-Wert des alkalisch behandelten Ausgangsmaterials auf 7,5 oder darunter eingestellt. Hierdurch kann der ursprüngliche pH-Wert des Ausgangsmaterials wiederhergestellt werden, bzw. ist zumindest eine Annäherung an diesen pH-Wert möglich. Vorzugsweise wird der pH-Wert in Schritt (c) auf 7,0 oder darunter eingestellt, bevorzugter auf 6,0 oder darunter, noch bevorzugter auf 5,0 oder darunter, besonders bevorzugt auf 4,5 oder darunter. Bevorzugt ist es, wenn der pH-Wert auf einen Wert im Bereich von 2,0 bis 7,5 eingestellt wird, bevorzugter von 3,0 bis 7,5, noch bevorzugter von 3,5 bis 7,5, am bevorzugtesten von 4,0 bis 7,0. Dies kann die Lagerstabilität des mit dem Verfahren erhaltenen, pflanzenbasierten Klebers verbessern.

Der pH-Wert kann in Schritt (c) mit einer Säure eingestellt werden. Die Säure kann Salzsäure, Schwefelsäure, Essigsäure, Zitronensäure und/oder Phosphorsäure umfassen. Vorzugsweise ist die Säure Schwefelsäure. Dann kann der pH-Wert effektiv und schnell eingestellt werden. Auch die Verwendung von Zitronensäure ist bevorzugt. Dann kann (bei entsprechender Auswahl anderer im Verfahren verwendeter Substanzen bzw. Rohstoffe) ein biologischer, pflanzenbasierter Kleber erhalten werden, was die Nachhaltigkeit weiter verbessert.

Bevorzugt ist die Säure in Wasser gelöst, wobei die Lösung der Säure in Wasser vorzugsweise 20 bis 50 Gew% der Säure umfasst, bevorzugter 30 bis 40 Gew%, bezogen auf das Gesamtgewicht der Lösung. Dann wird eine genauere Dosierung ermöglicht und kann der in Schritt (c) einzustellende pH-Wert exakt eingestellt werden.

Wenn die Temperatur in Schritt (b) oberhalb von 50 °C liegt, kann das Ausgangsmaterial zwischen den Schritten (b) und (c) auf eine Temperatur von 50 °C oder darunter abgekühlt werden, vorzugsweise auf 45 °C oder darunter, noch bevorzugter auf 35 °C oder darunter. Dies kann die Verfahrensökonomie verbessern, insbesondere kann es die Energiekosten reduzieren. Weiters ist eine Abkühlung aus sicherheitstechnischen Aspekten vorteilhaft, wenn in Schritt (c) eine Säure zur Einstellung des pH-Werts verwendet wird.

In Schritt (d) wird der pflanzenbasierte Kleber fertiggestellt. Die Fertigstellung des pflanzenbasierten Klebers kann eine Waschung, eine Entwässerung, ein Abfüllen und/oder ein Verpacken umfassen.

Der Aschegehalt des fertiggestellten, pflanzenbasierten Klebers kann aufgrund der alkalischen Behandlung erhöht sein. Der pflanzenbasierte Kleber kann einen Aschegehalt bei 500 °C von 2,0 Gew% oder darüber aufweisen, oder von 4,0 Gew% oder darüber, oder sogar von 6,0 Gew% oder darüber, bezogen auf das Gesamtgewicht des pflanzenbasierten Klebers (Angaben jeweils in Trockensubstanz). Dies deutet auf die vorgehende Durchführung des erfindungsgemäßen Verfahrens hin: In der Asche des pflanzenbasierten Klebers können Salze vorhanden sein, deren Anwesenheit auf die alkalische Behandlung in Schritt (b) und die Einstellung des pH-Werts in Schritt (c) des Ausgangsmaterials zurückzuführen ist. Insbesondere bei einem hohen Aschegehalt des pflanzenbasierten Klebers kann das Fertigstellen des Klebers in Schritt (d) eine Waschung umfassen. Der pflanzenbasierte Kleber kann z.B. mit Wasser gewaschen werden. Hierdurch wird der Aschegehalt im fertiggestellten, pflanzenbasierten Kleber vorzugsweise auf 2,5 Gew% oder darunter verringert, bevorzugter auf 1,5 Gew% oder darunter.

Die Entwässerung kann in an sich bekannter Weise vorgenommen werden und beispielsweise ein Dekantieren, eine Sedimentation, eine Zentrifugation, eine Filtration und/oder eine Trocknung umfassen. Dadurch kann eine Flüssigkeit, insbesondere Wasser, welche im Ausgangsmaterial enthalten war und/oder im Verfahren verwendet wurde (z.B. zur Einstellung des pH-Werts in den Schritten (b) und/oder (c)), entfernt werden. Die Entwässerung kann mit einem Dekanter, einem Separator, einem Filter (insbesondere einem Vakuumdrehfilter oder einem Pressfilter), einer Zentrifuge, einem Hydrozyklon und/oder einem Ofen erfolgen. Vorzugsweise umfasst die Fertigstellung des pflanzenbasierten Klebers eine Entwässerung mit einem Dekanter. Hierfür kann ein Zweiphasendekanter oder ein Dreiphasendekanter eingesetzt werden. Durch Dekantieren kann ein schnelles Abtrennen der Flüssigkeit mit einer guten Trennungseffizienz ermöglicht werden. Auch ist die Handhabung eines Dekanters vergleichsweise einfach.

Die Fertigstellung des pflanzenbasierten Klebers umfasst vorzugsweise eine Trocknung. Der pflanzenbasierte Kleber kann dadurch vollständig oder zumindest nahezu vollständig getrocknet werden. Dadurch kann das Risiko des Wachstums von Schimmelpilzen (das erneut zur Bildung von Mykotoxinen führen könnte) reduziert werden, und die Lagerstabilität des fertiggestellten, pflanzenbasierten Klebers kann verbessert werden. Der pflanzenbasierte Kleber kann bei einer Temperatur im Bereich von 60 bis 95 °C getrocknet werden, vorzugsweise von 70 bis 90 °C. Die Trocknung kann dann effizient erfolgen, wobei gleichzeitig die Gefahr einer chemischen Veränderung, insbesondere einer Denaturierung, von Bestandteilen des pflanzenbasierten Klebers vermieden oder zumindest verringert werden kann. Der pflanzenbasierte Kleber kann in einem Trockner getrocknet werden, insbesondere in einem Kontakttrockner, Wirbelschichttrockner, Stromtrockner und/oder Scheibentrockner. Dies kann eine gute Prozessüberwachung und ein einfaches Handling ermöglichen.

Vorzugsweise umfasst die Fertigstellung des pflanzenbasierten Klebers eine Entwässerung und eine nachfolgende Trocknung. Dadurch kann das Verfahren effizient ausgestaltet werden, da ein Großteil der Flüssigkeit mittels Zentrifugation entfernt werden kann. Bei der nachfolgenden Trocknung kann dann eine verbliebene Restmenge der Flüssigkeit abgetrennt werden.

Der pflanzenbasierte Kleber kann aufgrund der alkalischen Behandlung ein verändertes Abnutschverhalten aufweisen. Insbesondere können die Abnutschzeit und die Zeit bis zu einer Rissbildung erhöht werden. Der pflanzenbasierte Kleber kann eine Abnutschzeit von 1,2 min oder länger aufweisen, oder von 1,3 min oder länger, oder sogar von 1,5 min oder länger; und/oder der pflanzenbasierte Kleber kann eine Zeit bis zu einer Rissbildung von 3,0 min oder länger aufweisen, oder von 5,0 min oder darüber, oder es kann sogar gar keine Rissbildung auftreten.

Der fertiggestellte, pflanzenbasierte Kleber enthält nach Schritt (d) vorzugsweise eine Menge an Flüssigkeit, insbesondere Wasser, von 20 Gew% oder darunter, bevorzugter von 13 Gew% oder darunter, bezogen auf das Gesamtgewicht des pflanzenbasierten Klebers. Dementsprechend kann er eine gute Lagerstabilität aufweisen.

Vorzugsweise umfasst die Fertigstellung des pflanzenbasierten Klebers auch das Verpacken des pflanzenbasierten Klebers in eine lagerstabile Form und/oder in ein verkaufsfertiges Gebinde. Auch dieser finale Schritt der Endfertigung des pflanzenbasierten Klebers gemäß der vorliegenden Erfindung kann in an sich bekannter Weise vorgenommen werden.

Der fertiggestellte, pflanzenbasierte Kleber kann einen Gehalt an T2 von 250 ppb oder darunter aufweisen, vorzugsweise von 100 ppb oder darunter, bevorzugter von 50 ppb oder darunter, noch bevorzugter von 35 ppb oder darunter; und/oder einen Gehalt an HT2 von 350 ppb oder darunter, vorzugsweise von 100 ppb oder darunter, bevorzugter von 50 ppb oder darunter, noch bevorzugter von 45 ppb oder darunter. Der fertiggestellte, pflanzenbasierte Kleber weist vorzugsweise einen Gehalt T2 und/oder HT2, bevorzugter einen Gesamtgehalt an T2 und HT2, von 500 ppb oder darunter auf, vorzugsweise von 300 ppb oder darunter, bevorzugter von 200 ppb oder darunter, noch bevorzugter von 130 ppb oder darunter, noch bevorzugter von 100 ppb oder darunter, besonders bevorzugt von 50 ppb oder darunter. Aufgrund des niedrigen Gehalts an T2 und/oder HT2 ist der pflanzenbasierten Kleber gut für die Verwendung in der Futtermittelindustrie, insbesondere für die Jungtierfütterung (z.B. Ferkel) und Haustierfütterung geeignet.

Der fertiggestellte, pflanzenbasierte Kleber kann einen Gehalt an Deoxynivalenol von 3200 ppb oder darunter aufweisen, vorzugsweise von 2000 ppb oder darunter, bevorzugter von 1000 ppb oder darunter, noch bevorzugter von 500 ppb oder darunter, noch bevorzugter von 300 ppb oder darunter. Der fertiggestellte, pflanzenbasierten Kleber kann einen Gehalt an Zearalenon von 2000 ppb oder darunter aufweisen, vorzugsweise von 1000 ppb oder darunter, bevorzugter von 500 ppb oder darunter, noch bevorzugter von 400 ppb oder darunter, besonders bevorzugt von 300 ppb oder darunter. Der fertiggestellte, pflanzenbasierte Kleber kann einen Gehalt von Fumonisinen von 5000 ppb oder darunter aufweisen, vorzugsweise von 3000 ppb oder darunter, bevorzugter von 1500 ppb oder darunter. Unter dem Gehalt von Fumonisinen wird dabei die Summe an Fumonisin B1, Fumonisin B2 und Fumonisin B3 verstanden. Der fertiggestellte, pflanzenbasierte Kleber kann einen Gehalt von Aflatoxinen von 80 ppb oder darunter aufweisen, vorzugsweise von 30 ppb oder darunter, bevorzugter von 10 ppb oder darunter, noch bevorzugter von 3 ppb oder darunter. Der fertiggestellte, pflanzenbasierte Kleber kann einen Gehalt von Ochratoxin A von 500 ppb oder darunter aufweisen, vorzugsweise von 50 ppb oder darunter, bevorzugter von 10 ppb oder darunter, noch bevorzugter von 5 ppb oder darunter. Somit kann der pflanzenbasierte Kleber noch besser zum Schutz der Gesundheit beitragen.

Der fertiggestellte, pflanzenbasierter Kleber weist vorzugsweise einen Proteingehalt von 40 Gew% oder darüber auf, vorzugsweise von 50 Gew% oder darüber, bevorzugter von 55 Gew% oder darüber, bezogen auf das Gesamtgewicht des pflanzenbasierten Klebers. Bevorzugt weist der fertiggestellte, pflanzenbasierte Kleber einen Proteingehalt im Bereich von 40 bis 85 Gew% auf, bevorzugter von 50 bis 80 Gew%, noch bevorzugter von 55 bis 75 Gew%, besonders bevorzugt von 55 bis 65 Gew%, bezogen auf das Gesamtgewicht des pflanzenbasierten Klebers. Dementsprechend kann der pflanzenbasierte Kleber als hochwertiger Proteinlieferant in der Futtermittelindustrie, aber auch in der Nahrungsmittelindustrie, verwendet werden. Durch das erfindungsgemäße Verfahren wird der Proteingehalt unerwarteterweise nicht erhöht, im Gegensatz zu den Ausführungen von Lin F. et al. (Food Chemistry, 124, 801-807, 2011). Diese beschreiben ein Verfahren, in welchem der pH-Wert einer Mischung von Maiskleber in Wasser mit Natriumhydroxid auf 11,0 eingestellt und die Mischung für 1,0 h bei 90 °C gerührt wurde, gefolgt von einer Einstellung des pH-Werts der Mischung auf 7,0 und Zentrifugieren der Mischung. Das erhaltene Maisproteinisolat hatte einen Proteingehalt von 90,7%. Versuche der Erfinder, das Verfahren von Lin F. et al. zur Erhöhung des Proteingehalts nachzuarbeiten, haben nicht funktioniert - jedoch wurde überraschenderweise festgestellt, dass mit dem erfindungsgemäßen Verfahren ein pflanzenbasierter Kleber mit einem erheblich reduzierten Gehalt an T2 und/oder HT2 erhalten werden kann.

Der fertiggestellte, pflanzenbasierte Kleber kann aufgrund seiner alkalischen Behandlung eine vergleichsweise hohe Stickstofflöslichkeit von 1,0 Gew% oder darüber aufweisen, vorzugsweise von 1,3 Gew% oder darüber, bevorzugter von 1,5 Gew% oder darüber, noch bevorzugter von 1,8 Gew% oder darüber. Dadurch können im pflanzlichen Kleber enthaltene Proteine leichter aufgenommen und verwertet werden, was zu einer verbesserten Proteinverfügbarkeit und einer effizienteren Nutzung des Nahrungsmittels bzw. Futtermittels führt. Auch kann die vergleichsweise hohe Stickstofflöslichkeit die Aufnahme anderer Nährstoffe verbessern, da Stickstoff oft mit anderen essentiellen Nährstoffen (z.B. Aminosäuren, Mineralstoffen) verbunden ist.

Der fertiggestellte, pflanzenbasierte Kleber weist vorzugsweise einen Stickstoffgehalt im Bereich von 2,0 bis 15,0 Gew% auf, bevorzugter von 5,0 bis 13,0 Gew%, noch bevorzugter von 8,0 bis 12,0 Gew%, bezogen auf das Gesamtgewicht des pflanzenbasierten Klebers. Dies kann zu einer guten Futtereffizienz und/oder einer verbesserten Proteinversorgung beitragen, auch kann es den Aufbau und die Erhaltung von Muskelmasse unterstützen.

Der fertiggestellte, pflanzenbasierte Kleber kann aufgrund der alkalischen Behandlung eine höhere Quellung aufweisen als ein unbehandelter pflanzenbasierter Kleber, vorzugsweise eine Quellung von 26,0 ml oder darüber, bevorzugter von 28,0 ml oder darüber, noch bevorzugter von 30,0 ml oder darüber. Die vergleichsweise hohe Quellung kann bei der Nahrungsaufnahme des pflanzenbasierten Klebers vorteilhaft sein. So kann der pflanzliche Kleber dadurch besser verdaulich gemacht werden, die Darmgesundheit kann gefördert werden, und/oder die Sättigung der Tiere oder Menschen kann gesteigert werden.

Die Helligkeit des fertiggestellten, pflanzenbasierten Kleber kann durch die alkalische Behandlung verbessert sein. Der pflanzenbasierte Kleber weist vorzugsweise einen L*-Wert von 70,0 oder darüber auf, bevorzugter von 73,0 oder darüber, noch bevorzugter von 75,0 oder darüber.

Der fertiggestellte, pflanzenbasierte Kleber umfasst vorzugsweise ein Kation eines Alkalimetalls und/oder eines Erdalkalimetalls. Dies ist auf die alkalische Behandlung des pflanzenbasierten Klebers zurückzuführen. Der pflanzenbasierte Kleber umfasst das Kation des Alkalimetalls und/oder das Erdalkalimetalls vorzugsweise in einer Menge von 0,06 Gew% oder darüber, bevorzugter von 0,10 Gew% oder darüber, noch bevorzugter von 0,15 Gew% oder darüber, noch bevorzugter von 0,50 Gew% oder darüber, besonders bevorzugt von 1,00 Gew% oder darüber, bezogen auf das Gesamtgewicht des pflanzenbasierten Klebers. Dies kann einen Hinweis darauf geben, welcher pH-Wert für die alkalische Behandlung im erfindungsgemäßen Verfahren verwendet wurde. Das Kation des Alkalimetalls und/oder Erdalkalimetalls umfasst vorzugsweise ein Natrium-Ion, weil der pH-Wert für die alkalische Behandlung im erfindungsgemäßen Verfahren vorzugsweise mit Natriumhydroxid, Natriumcarbonat, Natriumhydrogencarbonat oder einer Kombination davon eingestellt wird.

Der fertiggestellte, pflanzenbasierte Kleber umfasst vorzugsweise ein Anion einer Säure, vorzugsweise in einer Menge von 0,06 Gew% oder darüber, bevorzugter von 0,10 Gew% oder darüber, noch bevorzugter von 0,15 Gew% oder darüber, noch bevorzugter von 0,50 Gew% oder darüber, besonders bevorzugt von 1,00 Gew% oder darüber, bezogen auf das Gesamtgewicht des pflanzenbasierten Klebers. Dies kann einen Hinweis darauf geben, welcher pH-Wert in Schritt (c) des Verfahrens eingestellt wurde. Das Anion der Säure umfasst vorzugsweise ein Sulfat-Anion und/oder ein Zitronensäure-Anion, weil der pH-Wert in Schritt (c) des Verfahrens vorzugsweise mit Schwefelsäure und/oder mit Zitronensäure eingestellt wird.

Die Erfindung betrifft weiters einen pflanzenbasierter Kleber, erhältlich durch das erfindungsgemäße Verfahren. Der pflanzenbasierte Kleber weist vorzugsweise einen Gehalt an T2 und/oder HT2 von 500 ppb oder darunter auf, und/oder eine Stickstofflöslichkeit von 1,0 Gew% oder darüber. Aufgrund des niedrigen Gehalts an T2 und/oder HT2 und der hohen Stickstofflöslichkeit ist der pflanzenbasierte Kleber gut für die Verwendung in der Futtermittelindustrie, aber auch in der Nahrungsmittelindustrie, geeignet.

Die Erfindung betrifft weiters die Verwendung des erfindungsgemäßen, pflanzenbasierten Klebers in der Nahrungsmittelindustrie. Die Erfindung betrifft außerdem die Verwendung des erfindungsgemäßen, pflanzenbasierten Klebers in der Futtermittelindustrie, insbesondere für die Jungtierfütterung (z.B. Ferkel) und Haustierfütterung.

Offenbart wird auch die Verwendung einer Base, vorzugsweise eines Hydroxids, Carbonats und/oder Hydrogencarbonats, besonders bevorzugt Natriumhydroxid, Natriumcarbonat, Natriumhydrogencarbonat oder einer Kombination davon zur Reduzierung des Gehalts an T2 und/oder HT2 des Ausgangsmaterials zur Herstellung des pflanzenbasierten Klebers mit dem erfindungsgemäßen Verfahren, wobei die Base dem Ausgangsmaterial derart zugegeben wird, um einen pH-Wert von 9,0 oder darüber einzustellen, und wobei das Ausgangsmaterial nachfolgend alkalisch behandelt wird, vorzugsweise bei einer Temperatur von 40 °C oder darüber.

Weiters offenbart wird ein Verfahren zur Herstellung eines biologischen, pflanzenbasierten Klebers mit einem reduzierten Gehalt an T2 und/oder HT2, umfassend die Schritte (a)-(d) des erfindungsgemäßen Verfahrens, wobei in Schritt (b) der pH-Wert von 9,0 oder darüber mit Natriumhydroxid, Natriumcarbonat, Natriumhydrogencarbonat oder einer Kombination davon eingestellt wird, und wobei der pH-Wert in Schritt (c) mit Zitronensäure eingestellt wird. Auch offenbart wird ein biologischer, pflanzenbasierter Kleber, erhältlich durch dieses Verfahren. Der biologische, pflanzenbasierte Kleber weist vorzugsweise einen Gehalt an T2 und/oder HT2 von 500 ppb oder darunter auf, und/oder eine Stickstofflöslichkeit von 1,0 Gew% oder darüber, und umfasst vorzugsweise ein Natrium-Kation, sowie ein Zitronensäure-Anion.

Der biologische, pflanzenbasierte Kleber kann bei ausschließlicher Verwendung von Rohstoffen bzw. Substanzen aus ökologischer bzw. biologischer Produktion erhalten werden. Dieser biologische, pflanzenbasierte Kleber kann als hochwertiges und nachhaltiges Futtermittel und/oder Nahrungsmittel verwendet werden. Unter der ökologischen bzw. biologischen Produktion wird insbesondere die Anwendung von Produktionsverfahren nach den Vorschriften der Verordnung (EU) 2018/848 des Europäischen Parlaments und des Rates vom 30. Mai 2018 auf allen Stufen der Produktion, der Aufbereitung und des Vertriebs verstanden.

Die Erfindung betrifft insbesondere die folgenden Ausführungsformen:
1. Verfahren zur Herstellung eines pflanzenbasierten Klebers mit einem reduzierten Gehalt an T-2-Toxin (T2) und/oder HT-2-Toxin (HT2), umfassend die Schritte:
   (a) Bereitstellung eines Ausgangsmaterials, das T2 und/oder HT2 enthält,
   (b) alkalische Behandlung des Ausgangsmaterials bei einem pH-Wert von 9,0 oder darüber, und vorzugsweise bei einer Temperatur von 40 °C oder darüber, wobei der Gehalt an T2 und/oder HT2 vorzugsweise um 50 Gew% oder mehr reduziert wird, bezogen auf den Gehalt an T2 und/oder HT2 des in Schritt (a) bereitgestellten Ausgangsmaterials,
   (c) Einstellung des pH-Werts des alkalisch behandelten Ausgangsmaterials auf 7,5 oder darunter, und
   (d) Fertigstellung des pflanzenbasierten Klebers.
2. Verfahren nach Ausführungsform 1, wobei das bereitgestellte Ausgangsmaterial ein weiteres Mykotoxin enthält, wobei das weitere Mykotoxin ausgewählt ist aus der Gruppe bestehend aus Fusarien-Toxinen, Ochratoxinen, Aflatoxinen, oder einer Kombination davon.
3. Verfahren nach Ausführungsform 2, wobei das weitere Mykotoxin ausgewählt ist aus der Gruppe bestehend aus Deoxynivalenol (DON), Zearalenon (ZON), Ochratoxin A (OTA), Aflatoxinen, Fumonisinen, oder einer Kombination davon.
4. Verfahren nach Ausführungsform 2 oder 3, wobei das Aflatoxin ausgewählt ist aus Aflatoxin B1 (AFLA B1), Aflatoxin B2 (AFLA B2), Aflatoxin G1 (AFLA G1), und/oder Aflatoxin G2 (AFLA G2); und/oder wobei das Fumonisin ausgewählt ist aus Fumonisin B1 (FUM B1), Fumonisin B2 (FUM B2) und/oder Fumonisin B3 (FUM B3).
5. Verfahren nach Ausführungsform 2 bis 4, wobei das weitere Mykotoxin Deoxynivalenol, Zearalenon und/oder Aflatoxin B1 ist.
6. Verfahren nach einer der Ausführungsformen 2 bis 5, wobei der Gehalt des weiteren Mykotoxins in Schritt (b) um 30 Gew% oder mehr reduziert wird, vorzugsweise um 40 Gew% oder mehr, bevorzugter um 50 Gew% oder mehr, noch bevorzugter um 60 Gew% oder mehr.
7. Verfahren nach einer der Ausführungsformen 1 bis 6, wobei der pflanzenbasierte Kleber einen Getreidekleber umfasst.
8. Verfahren nach Ausführungsform 7, wobei der pflanzenbasierte Kleber einen Maiskleber umfasst, vorzugsweise wobei der pflanzenbasierte Kleber ein Maiskleber ist.
9. Verfahren nach einer der Ausführungsformen 1 bis 8, wobei der Gehalt an T2 und/oder HT2 in Schritt (b) um 60 Gew% oder mehr reduziert wird, vorzugsweise um 70 Gew% oder mehr, bevorzugter um 80 Gew% oder mehr, noch bevorzugter um 90 Gew% oder mehr, besonders bevorzugt um 95 Gew% oder mehr.
10. Verfahren nach einer der Ausführungsformen 1 bis 9, wobei das Ausgangsmaterial in Schritt (b) in einer Mischung mit Wasser vorliegt, wobei die Mischung das Ausgangsmaterial vorzugsweise in einer Menge von 8 bis 14 Gew% umfasst, bevorzugter von 10 bis 12 Gew%, bezogen auf das Gesamtgewicht der Mischung.
11. Verfahren nach einer der Ausführungsformen 1 bis 10, wobei in Schritt (b) der pH-Wert von 9,0 oder darüber mit einer Base eingestellt wird, vorzugsweise mit einem Alkalimetallsalz und/oder mit einem Erdalkalimetallsalz, bevorzugter mit einem Hydroxid, einem Carbonat und/oder einem Hydrogencarbonat; wobei die Base besonders bevorzugt ausgewählt ist aus Natriumhydroxid, Natriumcarbonat, Natriumhydrogencarbonat oder einer Kombination davon.
12. Verfahren nach Ausführungsform 11, wobei die Base in Wasser gelöst ist, wobei die Lösung vorzugsweise 20 bis 50 Gew% der Base umfasst, bevorzugter 30 bis 40 Gew%, bezogen auf das Gesamtgewicht der Lösung.
13. Verfahren nach einer der Ausführungsformen 1 bis 12, wobei das Ausgangsmaterial in Schritt (b) bei einem pH-Wert von 9,5 oder darüber alkalisch behandelt wird, vorzugweise von 10,0 oder darüber, noch bevorzugter von 10,5 oder darüber.
14. Verfahren nach einer der Ausführungsformen 1 bis 13, wobei das Ausgangsmaterial in Schritt (b) bei einem pH-Wert im Bereich von 9,0 bis 12,0 alkalisch behandelt wird, vorzugsweise von 10,0 bis 12,0, bevorzugter von 10,0 bis 11,0.
15. Verfahren nach einer der Ausführungsformen 1 bis 14, wobei das Ausgangsmaterial in Schritt (b) bei einer Temperatur von 45 °C oder darüber alkalisch behandelt wird, vorzugsweise bei 50 °C oder darüber; bevorzugt bei einer Temperatur im Bereich von 40 bis 95 °C, bevorzugter von 40 bis 75 °C, noch bevorzugter von 45 bis 65 °C, am bevorzugtesten von 50 bis 60 °C.
16. Verfahren nach einer der Ausführungsformen 1 bis 15, wobei das Ausgangsmaterial in Schritt (b) für mindestens 5 min alkalisch behandelt wird, vorzugsweise für mindestens 10 min, bevorzugter für mindestens 15 min, noch bevorzugter für mindestens 20 min, noch bevorzugter für mindestens 30 min, noch bevorzugter für mindestens 1,0 h, noch bevorzugter für mindestens 1,5 h; vorzugsweise wobei das Ausgangsmaterial für 30 min bis 10,0 h alkalisch behandelt wird, bevorzugter für 1,0 bis 6,0 h, noch bevorzugter für 1,0 bis 3,5 h.
17. Verfahren nach einer der Ausführungsformen 1 bis 16, wobei das Ausgangsmaterial in Schritt (b) unter Rühren alkalisch behandelt wird, wobei das Ausgangsmaterial vorzugsweise mit einer Rotationsgeschwindigkeit im Bereich von 50 bis 400 UpM gerührt wird, bevorzugter von 100 bis 200 UpM.
18. Verfahren nach einer der Ausführungsformen 1 bis 17, wobei das Ausgangsmaterial in Schritt (b) eine Viskosität bei 25 °C von 1000 mPas oder darunter aufweist, bevorzugter von 850 mPas oder darunter, noch bevorzugter von 750 mPas oder darunter, noch bevorzugter von 650 mPas oder darunter; bevorzugt im Bereich von 100 bis 850 mPas, bevorzugter von 250 bis 650 mPas.
19. Verfahren nach einer der Ausführungsformen 1 bis 18, wobei der pH-Wert in Schritt (c) auf 7,0 oder darunter eingestellt wird, vorzugsweise auf 6,0 oder darunter, bevorzugter auf 5,0 oder darunter, noch bevorzugter auf 4,5 oder darunter; bevorzugt auf einen Wert im Bereich von 2,0 bis 7,5, bevorzugter von 3,0 bis 7,5, noch bevorzugter von 3,5 bis 7,5, am bevorzugtesten von 4,0 bis 7,0.
20. Verfahren nach einer der Ausführungsformen 1 bis 19, wobei der pH-Wert in Schritt (c) mit einer Säure eingestellt wird, vorzugsweise mit Schwefelsäure und/oder Zitronensäure.
21. Verfahren nach Ausführungsform 20, wobei die Säure in Wasser gelöst ist, wobei die Lösung der Säure in Wasser vorzugsweise 10 bis 70 Gew% der Säure umfasst, bevorzugter 40 bis 60 Gew%, bezogen auf das Gesamtgewicht der Lösung.
22. Verfahren nach einer der Ausführungsformen 1 bis 21, wobei, wenn die Temperatur in Schritt (b) oberhalb von 50 °C liegt, das Ausgangsmaterial zwischen den Schritten (b) und (c) auf eine Temperatur von 50 °C oder darunter abgekühlt wird, vorzugsweise auf 45 °C oder darunter, noch bevorzugter auf 35 °C oder darunter.
23. Verfahren nach einer der Ausführungsformen 1 bis 22, wobei die Fertigstellung des pflanzenbasierten Klebers eine Waschung, eine Entwässerung, ein Abfüllen und/oder ein Verpacken umfasst, wobei die Entwässerung vorzugsweise ein Dekantieren, eine Sedimentation, eine Zentrifugation, eine Filtration und/oder eine Trocknung umfasst.
24. Verfahren nach Ausführungsform 23, wobei die Fertigstellung des pflanzenbasierten Klebers eine Entwässerung mit einem Dekanter umfasst.
25. Verfahren nach einer der Ausführungsformen 23 oder 24, wobei die Fertigstellung des pflanzenbasierten Klebers eine Trocknung umfasst, insbesondere ein Dekantieren und eine nachfolgende Trocknung.
26. Verfahren nach einer der Ausführungsformen 23 bis 25, wobei der pflanzenbasierte Kleber bei einer Temperatur im Bereich von 60 bis 95 °C getrocknet wird, bevorzugter von 70 bis 90 °C.
27. Verfahren nach einer der Ausführungsformen 23 bis 26, wobei der pflanzenbasierte Kleber in einem Kontakttrockner, Wirbelschichttrockner, Stromtrockner und/oder Scheibentrockner getrocknet wird.
28. Verfahren nach einer der Ausführungsformen 1 bis 27, wobei der fertiggestellte, pflanzenbasierte Kleber nach Schritt (d) eine Menge an Flüssigkeit, insbesondere Wasser, von 20 Gew% oder darunter enthält, bevorzugter von 13 Gew% oder darunter, bezogen auf das Gesamtgewicht des pflanzenbasierten Klebers.
29. Verfahren nach einer der Ausführungsformen 1 bis 28, wobei der fertiggestellte, pflanzenbasierte Kleber einen Gehalt an T2 und/oder HT2 von 500 ppb oder darunter aufweist, vorzugsweise von 300 ppb oder darunter, bevorzugter von 200 ppb oder darunter, noch bevorzugter von 130 ppb oder darunter, noch bevorzugter von 100 ppb oder darunter, besonders bevorzugt von 50 ppb oder darunter.
30. Verfahren nach einer der Ausführungsformen 1 bis 29, wobei der fertiggestellte, pflanzenbasierte Kleber einen Gehalt an Deoxynivalenol von 3200 ppb oder darunter aufweist, vorzugsweise von 2000 ppb oder darunter, bevorzugter von 1000 ppb oder darunter, noch bevorzugter von 500 ppb oder darunter, noch bevorzugter von 300 ppb oder darunter.
31. Verfahren nach einer der Ausführungsformen 1 bis 30, wobei der fertiggestellte, pflanzenbasierte Kleber einen Gehalt an Zearalenon von 2000 ppb oder darunter aufweist, vorzugsweise von 1000 ppb oder darunter, bevorzugter von 500 ppb oder darunter, noch bevorzugter von 400 ppb oder darunter, besonders bevorzugt von 300 ppb oder darunter.
32. Verfahren nach einer der Ausführungsformen 1 bis 31, wobei der fertiggestellte, pflanzenbasierte Kleber einen Proteingehalt von 40 Gew% oder darüber aufweist, vorzugsweise von 50 Gew% oder darüber, bevorzugter von 55 Gew% oder darüber, bezogen auf das Gesamtgewicht des pflanzenbasierten Klebers.
33. Verfahren nach Ausführungsform 32, wobei der fertiggestellte, pflanzenbasierte Kleber vorzugsweise einen Proteingehalt im Bereich von 40 bis 85 Gew% aufweist, bevorzugter von 50 bis 80 Gew%, noch bevorzugter von 55 bis 75 Gew%, besonders bevorzugt von 55 bis 65 Gew%, bezogen auf das Gesamtgewicht des pflanzenbasierten Klebers.
34. Verfahren nach einer der Ausführungsformen 1 bis 33, wobei der fertiggestellte, pflanzenbasierte Kleber eine Stickstofflöslichkeit von 1,0 Gew% oder darüber aufweist, vorzugsweise von 1,3 Gew% oder darüber, bevorzugter von 1,5 Gew% oder darüber, noch bevorzugter von 1,8 Gew% oder darüber.
35. Verfahren nach einer der Ausführungsformen 1 bis 34, wobei der fertiggestellte, pflanzenbasierte Kleber einen Stickstoffgehalt im Bereich von 2,0 bis 15,0 Gew% aufweist, bevorzugt von 5,0 bis 13,0 Gew%, noch bevorzugter von 8,0 bis 12,0 Gew%, bezogen auf das Gesamtgewicht des pflanzenbasierten Klebers.
36. Verfahren nach einer der Ausführungsformen 1 bis 35, wobei der fertiggestellte, pflanzenbasierte Kleber eine Quellung von 26,0 ml oder darüber aufweist, bevorzugter von 28,0 ml oder darüber, noch bevorzugter von 30,0 ml oder darüber.
37. Verfahren nach einer der Ausführungsformen 1 bis 36, wobei der fertiggestellte, pflanzenbasierte Kleber einen Helligkeits-L*-Wert von 70,0 oder darüber aufweist, bevorzugter von 73,0 oder darüber, noch bevorzugter von 75,0 oder darüber.
38. Verfahren nach einer der Ausführungsformen 1 bis 37, wobei der fertiggestellte, pflanzenbasierte Kleber ein Kation eines Alkalimetalls und/oder eines Erdalkalimetalls umfasst.
39. Verfahren nach Ausführungsform 38, wobei der fertiggestellte, pflanzenbasierte Kleber das Kation des Alkalimetalls und/oder das Erdalkalimetalls in einer Menge von 0,06 Gew% oder darüber, bevorzugter von 0,10 Gew% oder darüber, noch bevorzugter von 0,15 Gew% oder darüber, noch bevorzugter von 0,50 Gew% oder darüber, besonders bevorzugt von 1,00 Gew% oder darüber, bezogen auf das Gesamtgewicht des pflanzenbasierten Klebers.
40. Verfahren nach Ausführungsform 38 oder 39, wobei das Kation des Alkalimetalls und/oder Erdalkalimetalls ein Natrium-Ion umfasst.
41. Verfahren nach einer der Ausführungsformen 37 bis 40, wobei der fertiggestellte, pflanzenbasierte Kleber ein Anion einer Säure umfasst, vorzugsweise ein Sulfat-Anion und/oder ein Zitronensäure-Anion, vorzugsweise in einer Menge von 0,06 Gew% oder darüber, bevorzugter von 0,10 Gew% oder darüber, noch bevorzugter von 0,15 Gew% oder darüber, noch bevorzugter von 0,50 Gew% oder darüber, besonders bevorzugt von 1,00 Gew% oder darüber, bezogen auf das Gesamtgewicht des pflanzenbasierten Klebers.
42. Pflanzenbasierter Kleber, erhältlich durch ein Verfahren nach einer der Ausführungsformen 1 bis 41.
43. Pflanzenbasierter Kleber nach Ausführungsform 42, aufweisend einen Gehalt an T2 und/oder HT2 von 500 ppb oder darunter, und/oder eine Stickstofflöslichkeit von 1,0 Gew% oder darüber.
44. Verwendung des pflanzenbasierten Klebers nach Ausführungsform 42 oder 43 in der Nahrungsmittelindustrie.
45. Verwendung des pflanzenbasierten Klebers nach einer der Ausführungsformen 42 bis 44 in der Futtermittelindustrie, insbesondere für die Jungtierfütterung und Haustierfütterung.
46. Verwendung einer Base, vorzugsweise eines Hydroxids, Carbonats und/oder Hydrogencarbonats, besonders bevorzugt Natriumhydroxid, Natriumcarbonat, Natriumhydrogencarbonat oder einer Kombination davon zur Reduzierung des Gehalts an T2 und/oder HT2 eines Ausgangsmaterials zur Herstellung eines pflanzenbasierten Klebers mit dem Verfahren nach einer der Ausführungsformen 1 bis 36, wobei die Base dem Ausgangsmaterial derart zugegeben wird, um einen pH-Wert von 9,0 oder darüber einzustellen, und wobei das Ausgangsmaterial nachfolgend alkalisch behandelt wird, vorzugsweise bei einer Temperatur von 40 °C oder darüber.
47. Verfahren zur Herstellung eines biologischen, pflanzenbasierten Klebers mit einem reduzierten Gehalt an T2 und/oder HT2, umfassend die Schritte (a)-(d) nach Ausführungsform 1,
   wobei in Schritt (b) der pH-Wert von 9,0 oder darüber mit Natriumhydroxid, Natriumcarbonat, Natriumhydrogencarbonat oder einer Kombination davon eingestellt wird, und
   wobei der pH-Wert in Schritt (c) mit Zitronensäure eingestellt wird.
48. Verfahren nach Ausführungsform 47, weiters aufweisend ein oder mehrere Merkmal(e) einer der Ausführungsformen 2 bis 41.
49. Biologischer, pflanzenbasierter Kleber, erhältlich durch ein Verfahren nach Ausführungsform 47 oder 48.
50. Biologischer, pflanzenbasierter Kleber nach Ausführungsform 49, aufweisend einen Gehalt an T2 und/oder HT2 von 500 ppb oder darunter, und/oder eine Stickstofflöslichkeit von 1,0 Gew% oder darüber, und umfassend ein Natrium-Kation, sowie ein Zitronensäure-Anion.

### Figuren

Die folgenden Figuren sollen die Erfindung, wie sie in dieser Offenbarung beschrieben wird, veranschaulichen.
In Fig. 1a-b sind Haupteffektdiagramme dargestellt, welche die Abhängigkeit des Gehalts an ZON und T2/HT2 von Verfahrensparametern zeigen.
Fig. 2a-b zeigen Abbildungen von Überständen und Sedimenten von Maiskleber nach der Zentrifugation unter Variation von Verfahrensparametern.
Fig. 3 zeigt Abbildungen von Filterkuchen und Filtraten, bzw. Überständen und Sedimenten von Maisklebern nach der Zentrifugation unter Variation des Ausgangsmaterials und von Verfahrensparametern.
In Fig. 4 ist ein Foto eines alkalisch behandelten, entwässerten Maisklebers im Büchner-Trichter dargestellt.

### Beispiele

Die Erfindung wird nachstehend anhand von Beispielen weiter erläutert, auf die sie jedoch nicht beschränkt sein soll.

### Beispiel 1 - Einfluss von Verfahrensparametern

Der Einfluss von Verfahrensparametern (Zeit, pH-Wert und Temperatur) auf physikalische Eigenschaften, die Zusammensetzung und den Mykotoxingehalt von Maisklebern wurde untersucht. Insgesamt wurden 13 Versuche gemäß Tabelle 1 durchgeführt. Als Ausgangsmaterial wurde 200 g eines mit Mykotoxinen gespikten Maisklebers verwendet. Der Maiskleber wurde bei erhöhter Temperatur (50 °C, 70 °C oder 90 °C) einer alkalischen Behandlung bei einem pH-Wert im Bereich von 8,0 bis 11,0 (eingestellt mittels 50 Gew%-igem Natriumhydroxid) unterzogen. Die Behandlungszeit lag im Bereich von 0,5 bis 3,0 h. Anschließend wurde der Maiskleber ggf. auf 50 °C abgekühlt (im Falle einer Temperatur bei der alkalischen Behandlung bei 70 °C bzw. 90 °C) und nachfolgend mit 50 Gew%-iger Schwefelsäure auf einen pH-Wert im Bereich von 4,0 bis 7,0 eingestellt. Danach wurde der Maiskleber zur Entwässerung einer Zentrifugation bei 20 °C und einer Rotationsgeschwindigkeit von 3000xg unterzogen.

**Tabelle 1: Herstellung von Maisklebern mittels verschiedener Verfahrensparameter**

| | **alkalische Behandlung** | | | **nachfolgend eingestellter pH-Wert (-)** |
|---|---|---|---|---|
| **Versuch Nr.** | **pH-Wert (-)** | **Temperatur (°C)** | **Behandlungszeit (h)** | |
| 1 | 8,0 | 90 | 0,5 | 7,0 |
| 2 | 9,5 | 50 | 0,5 | 4,0 |
| 3 | 8,0 | 50 | 0,5 | 5,5 |
| 4 | 11,0 | 50 | 3,0 | 4,0 |
| 5 | 11,0 | 50 | 1,75 | 7,0 |
| 6 | 8,0 | 50 | 3,0 | 7,0 |
| 7 | 9,5 | 90 | 3,0 | 7,0 |
| 8 | 8,0 | 90 | 1,75 | 4,0 |
| 9 | 8,0 | 70 | 3,0 | 4,0 |
| 10 | 11,0 | 90 | 0,5 | 4,0 |
| 11 | 11,0 | 70 | 0,5 | 7,0 |
| 12 | 9,5 | 70 | 1,75 | 5,5 |
| 13 | 11,0 | 90 | 3,0 | 5,5 |

Die Viskosität der Maiskleber unmittelbar vor der Zentrifugation wurde ermittelt, und die sich nach der Zentrifugation ausbildenden Phasen (Sediment und Überstand) wurden im Hinblick auf deren Gewichtsanteil, Trockensubstanzgehalt (Maß für die Entwässerbarkeit), Stickstoffgehalt und Proteingehalt untersucht. Die Ergebnisse dieser Analysen zeigt Tabelle 2; neben den Ergebnissen der Versuche Nr. 1-13 sind auch Ergebnisse eines Referenzversuchs ("Ref.") angeführt - hierbei wurde keine alkalische Behandlung durchgeführt (gemäß Schritt (c) des erfindungsgemäßen Verfahrens), und der pH-Wert wurde auch nicht auf 7,5 oder darunter eingestellt (gemäß Schritt (d) des erfindungsgemäßen Verfahrens).

Wie aus Tabelle 2 ersichtlich ist, wird die Viskosität der Maiskleber maßgeblich durch die Temperatur der alkalischen Behandlung beeinflusst, da es bei 90 °C zu einer Verkleisterung der Stärke kommt. Ein hoher pH-Wert kann diesen Viskositätsanstieg aufgrund des damit einhergehenden Stärkeabbaus jedoch reduzieren. Unter moderaten Behandlungsbedingungen verändert sich die Viskosität nur geringfügig.

Die alkalische Behandlung führt zu einer Abnahme des Proteingehalts der Maiskleber, wie aus Tabelle 2 ersichtlich ist. Diese Abnahme ist umso stärker, je höher der pH-Wert ist, je länger die Behandlung dauert und/oder je höher die Temperatur ist. Unter moderaten Behandlungsbedingungen kommt es nur zu geringen Änderungen des Proteingehalts.

Weiters wurde der Mykotoxingehalt der Sedimente der Maiskleber nach der Zentrifugation untersucht. Tabelle 3a zeigt die absolute Abnahme des Gehalts an Deoxynivalenol (DON), Zearalenon (ZON), Aflatoxin B1 (AFLA B1), Fumonisinen (FUM), und T-2-Toxin sowie HT-2-Toxin (T2/HT2) der Versuche Nr. 1-13 und der Referenz ("Ref."). Angaben mit einem vorangehenden "<"-Zeichen besagen, dass der jeweilige Mykotoxingehalt unterhalb der Bestimmungsgrenze liegt.

In Tabelle 3b ist die relative Abnahme des Gehalts an Deoxynivalenol (DON), Zearalenon (ZON), Aflatoxin B1 (AFLA B1), Fumonisinen (FUM), und T-2-Toxin sowie HT-2-Toxin (T2/HT2) der Versuche Nr. 1-13 dargestellt, jeweils bezogen auf die Referenz. Die relative Abnahme wurde mittels folgender Formel berechnet: relative Abnahme = 100 - [absolute Abnahme eines der Versuche Nr. 1-13 (ppb) / absolute Abnahme der Referenz (ppb)]. Dabei wurde ein absoluter Mykotoxingehalt unterhalb der Bestimmungsgrenze als "0" interpretiert. Sich in der Berechnung ergebende negative, relative Abnahmen wurden als 100% angesehen (d.h. keine Reduktion des Mykotoxingehalts).

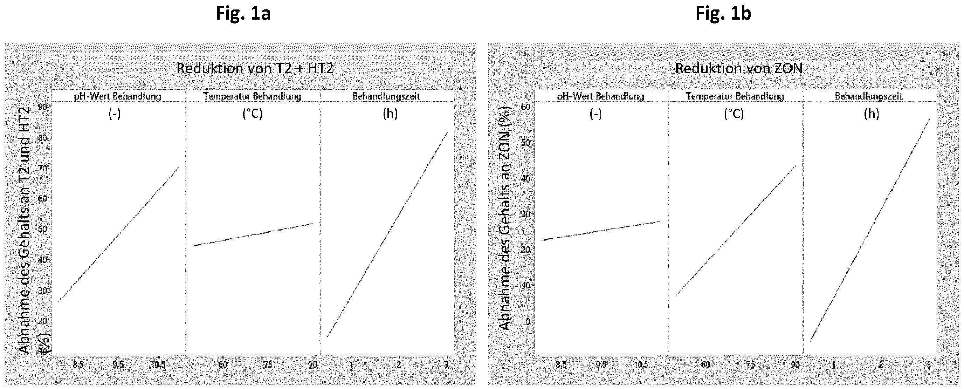

Die Einflüsse des pH-Werts, der Behandlungszeit und der Temperatur bei der alkalischen Behandlung, sowie der Einfluss des nachfolgend eingestellten pH-Werts auf den Gehalt an der Summe aus T2 und HT2 sowie auf den Gehalt an ZON im Sediment werden auch in Fig. 1a-b mittels Haupteffektdiagrammen veranschaulicht.

Die Ergebnisse zeigen einen deutlichen Effekt der alkalischen Behandlung auf den Mykotoxingehalt. Während der Abbau von DON, AFLA B1 und T2/HT2 unter gewissen Bedingungen vergleichsweise hoch ist, kommt es bei ZON und FUM nur zu moderaten Abnahmen. Bei T2/HT2 zeigt sich eine starke Wirkung der Behandlungszeit und des pH-Werts bei der alkalischen Behandlung auf den Mykotoxingehalt, während bei ZON vor allem die Temperatur bei der alkalischen Behandlung ausschlaggebend ist.

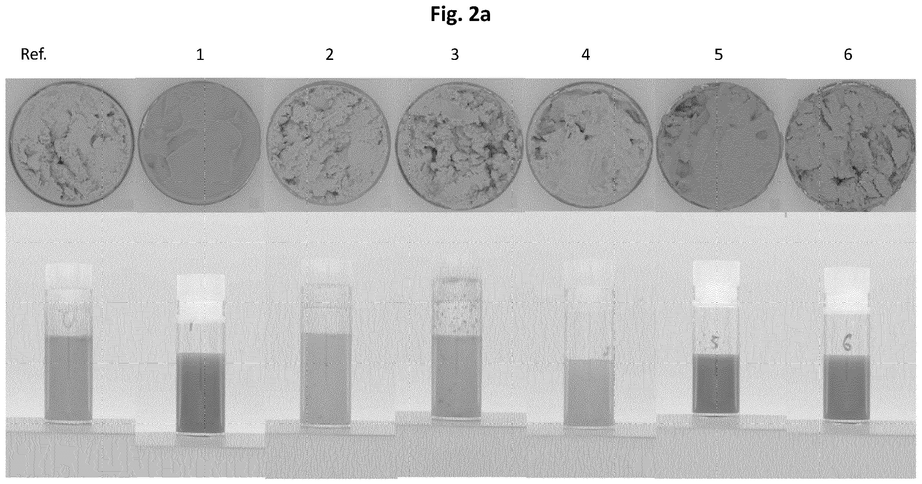

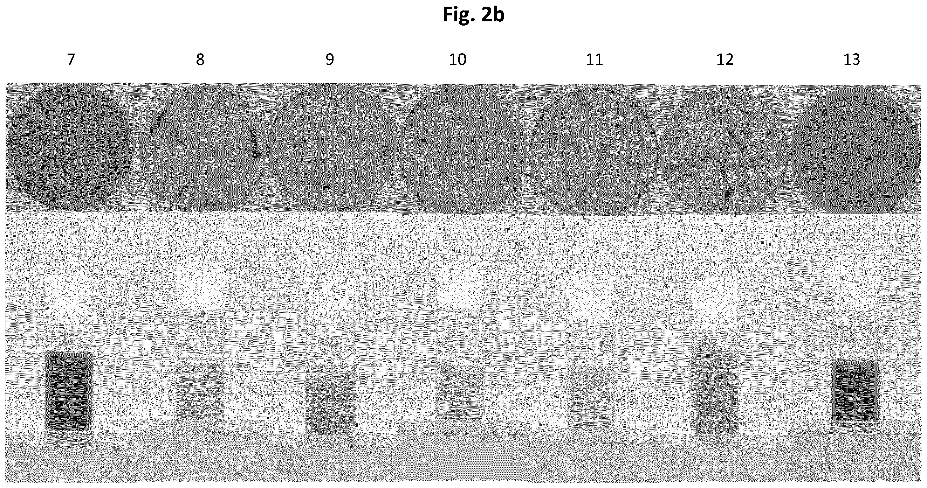

Darüber hinaus wurden auch Fotos der Überstände und der Sedimente zur optischen Beurteilung angefertigt, die in Fig. 2a-b dargestellt sind. Das Aussehen der Maiskleber verändert sich vor allem bei einer Kombination aus einem hohen pH-Wert und einer hohen Temperatur aufgrund der dann ablaufenden Maillard-Reaktion. Bei moderaten alkalischen Behandlungsbedingungen kommt es nur zu geringfügigen optischen Veränderungen.

Zusammenfassend können unter moderaten Bedingungen, wie insbesondere beim Versuch Nr. 4, gute Ergebnisse erzielt werden. Es kommt zu einer vergleichsweise hohen Reduktion der vor allem für den Tierfutterbereich wichtigen Mykotoxine T2 und HT2, bei gleichzeitig lediglich geringen Änderungen der Viskosität, des Proteingehalts und der Entwässerbarkeit der Maiskleber.

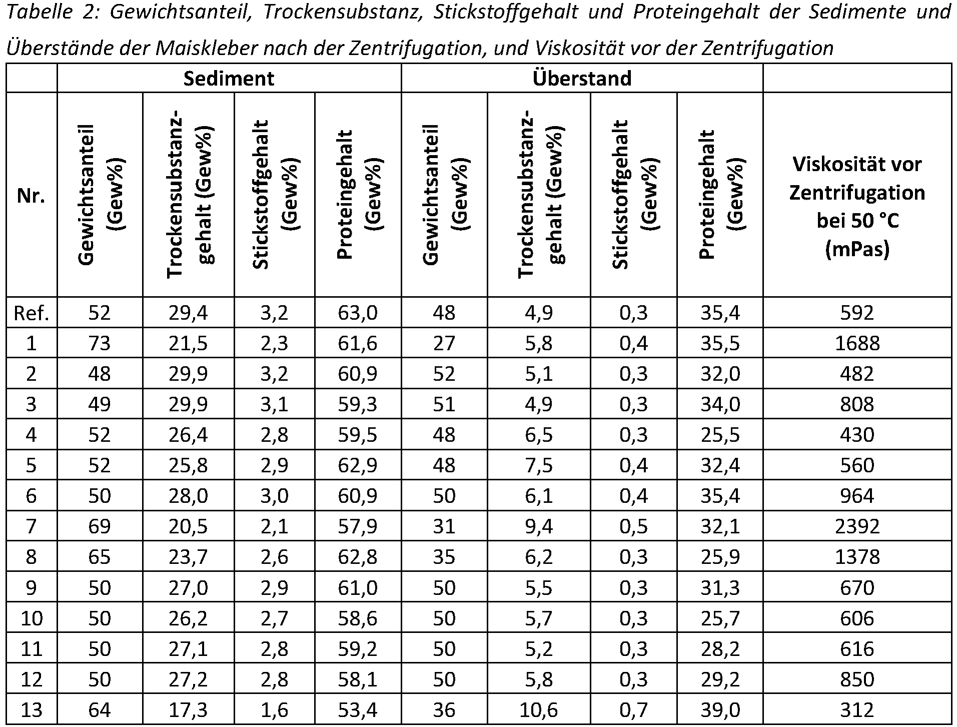

**Tabelle 3a: Absolute Abnahme des Mykotoxingehalts im Sediment der Maiskleber (Versuche Nr. 1-13 sowie der Referenz) nach der Zentrifugation**

| **Nr.** | **DON (ppb)** | **ZON (ppb)** | **AFLA B1 (ppb)** | **FUM (ppb)** | **T2/HT2 (ppb)** |
|---|---|---|---|---|---|
| Ref. | 204 | 869 | 5,0 | 6661 | 103 |
| 1 | <50 | 998 | 4,8 | 4872 | 97 |
| 2 | 161 | 1041 | 5,3 | 6488 | 100 |
| 3 | 110 | 897 | 4,6 | 5954 | 106 |
| 4 | 83 | 705 | 4,2 | 6318 | <20 |
| 5 | <100 | 931 | 3,3 | 2856 | <20 |
| 6 | <100 | 1100 | 5,0 | 3993 | 104 |
| 7 | <100 | <500 | 2,2 | 3080 | <20 |
| 8 | <100 | 1090 | 3,3 | 6940 | 69 |
| 9 | <100 | <500 | 0,6 | 685 | <20 |
| 10 | <100 | 1316 | 4,6 | 6590 | 110 |
| 11 | 114 | 800 | 3,5 | 6883 | 44 |
| 12 | 154 | 988 | 4,4 | 9221 | 79 |
| 13 | <100 | <500 | 2,9 | 1046 | <20 |

**Tabelle 3b: Relative Abnahme des Mykotoxingehalts im Sediment der Maiskleber (Versuche Nr. 1-13) nach der Zentrifugation, jeweils bezogen auf die Referenz**

| **Nr.** | **DON (%)** | **ZON (%)** | **AFLA B1 (%)** | **FUM (%)** | **T2/HT2 (%)** |
|---|---|---|---|---|---|
| 1 | 100 | 0 | 6 | 27 | 7 |
| 2 | 21 | 0 | 0 | 3 | 3 |
| 3 | 46 | 0 | 10 | 11 | 0 |
| 4 | 59 | 19 | 17 | 5 | 100 |
| 5 | 100 | 0 | 35 | 57 | 100 |
| 6 | 100 | 0 | 1 | 40 | 0 |
| 7 | 100 | 100 | 55 | 54 | 100 |
| 8 | 100 | 0 | 35 | 0 | 33 |
| 9 | 100 | 100 | 88 | 90 | 100 |
| 10 | 100 | 0 | 9 | 1 | 0 |
| 11 | 44 | 8 | 31 | 0 | 57 |
| 12 | 25 | 0 | 13 | 0 | 23 |
| 13 | 100 | 100 | 43 | 84 | 100 |

### Beispiel 2 - Einfluss des Ausgangsmaterials und der alkalischen Behandlung

Nach Ermittlung geeigneter Verfahrensparameter für die alkalische Behandlung wurde der Einfluss des Ausgangsmaterials sowie der Einfluss der alkalischen Behandlung auf physikalische Eigenschaften, die Zusammensetzung und den Mykotoxingehalt untersucht. Die alkalische Behandlung erfolgte bei einem pH-Wert von 10,5 (eingestellt mittels 20-50 Gew%-igem Natriumhydroxid) bei 55 °C für 3 h, mit einer nachfolgenden Einstellung des pH-Werts mit 20-50 Gew%-iger Schwefelsäure auf 4,0. Als Ausgangsmaterialien wurden ein reiner Maiskleber und ein mit Mykotoxinen gespikter Maiskleber verwendet. Pro Versuch wurden drei Ansätze hergestellt.

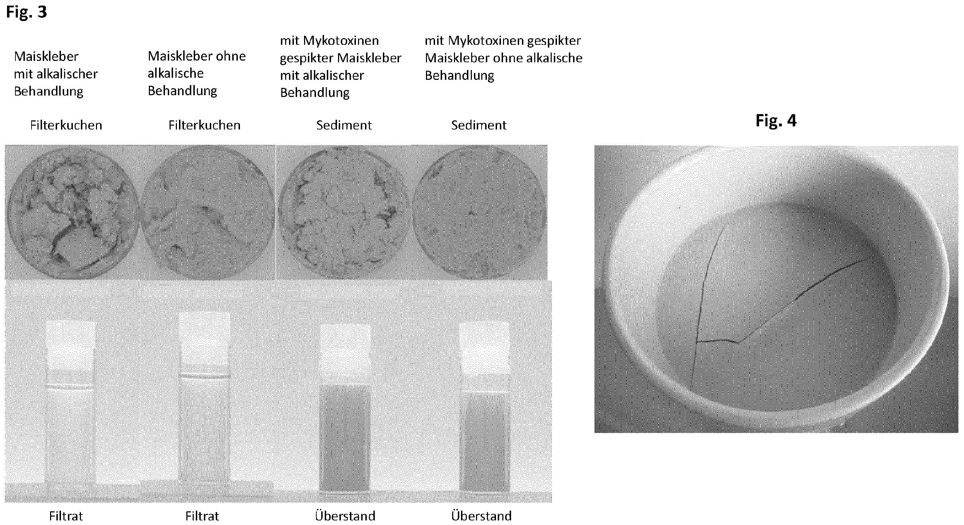

Hinsichtlich des reinen Maisklebers wurde der Einfluss der alkalischen Behandlung auf die Entwässerbarkeit mittels Filtration (Filterpapier 589/1) untersucht. In Tabelle 4 sind Eigenschaften des Filtrats und des Filterkuchens angegeben. Durch die alkalische Behandlung kommt es zu keiner Abnahme der Proteinausbeute (der Proteinanteil liegt bei 90,1 Gew% oder darüber), jedoch zu einer Abnahme der Entwässerbarkeit (ersichtlich aus dem geringeren Trockensubstanzgehalt des Filterkuchens nach alkalischer Behandlung verglichen mit jenem ohne alkalischer Behandlung) trotz der deutlich längeren Filtrationszeit. Entwässert wurde mittels Zentrifugation bei 3000xg. Vom Filterkuchen und vom Filtrat des reinen Maisklebers sowie vom Sediment und Überstand des mit Mykotoxinen gespikten Maisklebers wurden Fotos angefertigt, die in Fig. 3 abgebildet sind.

Bezüglich des mit Mykotoxinen gespikten Maisklebers wurde der Einfluss der alkalischen Behandlung auf den Gehalt verschiedener Mykotoxine untersucht. Den Gehalt an Deoxynivalenol (DON), Zearalenon (ZON), Ochratoxin A (OTA), Aflatoxin B1 (AFLA B1), Aflatoxin G1 (AFLA G1), Fumonisin B1 (FUM B1), Fumonisin B2 (FUM B2), Fumonisin B3 (FUM B3), T-2-Toxin (T2) und HT-2-Toxin (HT2) zeigt Tabelle 5. Der Mykotoxingehalt bezieht sich dabei auf den im Maiskleber nach der Durchführung des erfindungsgemäßen Verfahrens jeweils gesamt vorhandenen Mykotoxingehalt.

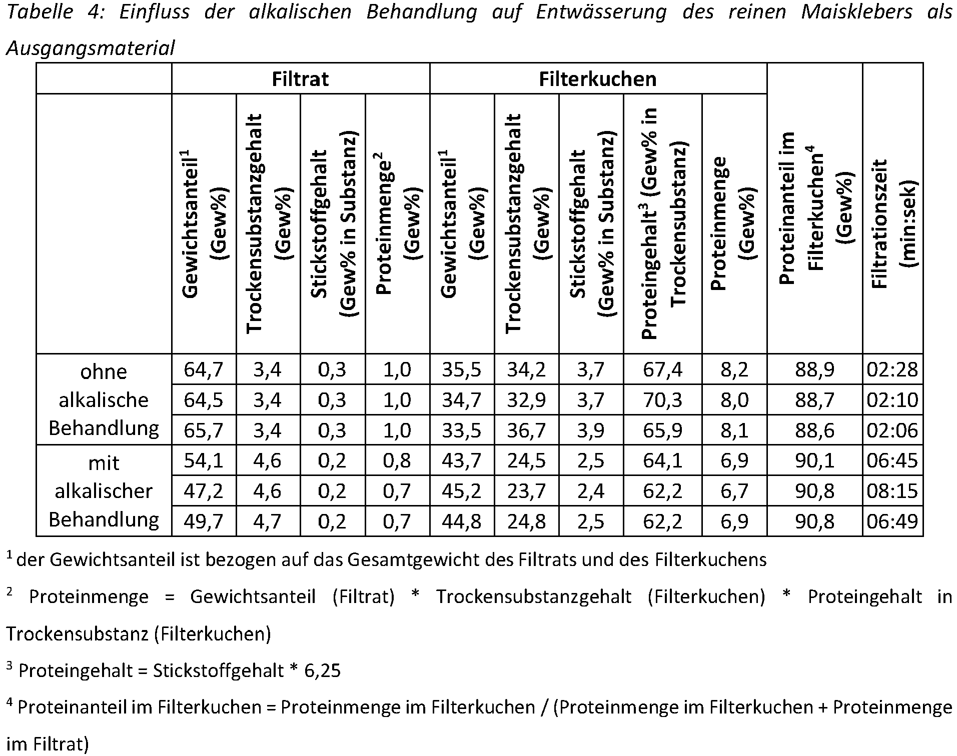

**Tabelle 5: Einfluss der alkalischen Behandlung auf den Mykotoxingehalt des mit Mykotoxinen gespikten Maisklebers als Ausgangsmaterialien**

| **TS¹ Sediment (Gew%)** | **TS¹ Überstand (Gew%)** | **DON (ppb)** | **ZON (PPb)** | **OTA (PPb)** | **AFLA B1 (PPb)** | **AFLA G1 (PPb)** | **FUM B1 (PPb)** | **FUM B2 (PPb)** | **FUM B3 (PPb)** | **T2 (PPb)** | **HT2 (PPb)** |
|---|---|---|---|---|---|---|---|---|---|---|---|
| *Mit Mykotoxinen gespikter Maiskleber, ohne alkalische Behandlung* | | | | | | | | | | | |
| 32,0 | 4,4 | 111,6 | 135,5 | 0,0 | 2,6 | 0,4 | 1740,6 | 640,5 | 221,1 | 20,3 | 30,8 |
| 32,5 | 4,5 | 124,0 | 116,5 | 0,0 | 2,6 | 0,4 | 1561,5 | 578,6 | 211,9 | 18,5 | 30,3 |
| 32,7 | 4,5 | 109,3 | 146,8 | 0,0 | 3,2 | 0,5 | 1739,4 | 649,0 | 235,8 | 18,9 | 33,5 |

| *Mit Mykotoxinen gespikter Maiskleber, mit alkalischer Behandlung* | | | | | | | | | | | |
|---|---|---|---|---|---|---|---|---|---|---|---|
| 24,2 | 6,8 | 43,4 | 60,8 | 0,0 | 1,4 | 0,0 | 937,3 | 417,0 | 124,7 | 0,0 | 0,0 |
| 29,0 | 5,7 | 50,7 | 79,3 | 0,0 | 1,7 | 0,0 | 1237,2 | 527,0 | 172,8 | 0,0 | 0,0 |
| 30,6 | 5,6 | 47,3 | 89,6 | 0,0 | 1,7 | 0,0 | 1323,8 | 533,8 | 169,7 | 0,0 | 0,0 |

| | | | | | | | | | | | |
|---|---|---|---|---|---|---|---|---|---|---|---|
| ¹ Trockensubstanz | | | | | | | | | | | |

### Beispiel 3 - Pilotversuch

Auf Basis der Erkenntnisse aus den Beispielen 1 und 2 wurde ein Pilotversuch unter Verwendung eines Maisklebers direkt aus der Produktion (Trockensubstanz 10,4 Gew%; siehe Tabelle 6) durchgeführt, wobei ein erster Teil des Maisklebers (120 kg) einer alkalischen Behandlung bei 45 °C (Beibehaltung der in der Produktion verwendeten Temperatur) und einem pH-Wert von 10,5 (eingestellt mittels 50 Gew%-igem Natriumhydroxid) für 3 h unterzogen wurde und anschließend mit 50 Gew%-iger Schwefelsäure ein pH-Wert von 4 eingestellt wurde, und ein zweiter Teil des Maisklebers (120 kg) unbehandelt belassen wurde. Sowohl der behandelte als auch der unbehandelte Maiskleber wurden nachfolgend mittels eines Dekanters oder mittels eines Vakuumdrehfilters (FC 050-0,3, Nivoba, Niederlande) entwässert. Die Entwässerung am Vakuumdrehfilter erfolgte mit dem Filtertuch Tetex Mono 05-1550-SK 030 (Sefar, Schweiz). Die Maiskleber wurden dann in einem Spin-Flash-Trockner (SFD 47, SPX Flow, USA) bei 60 °C und 1 atm getrocknet. Bei jedem Prozessschritt wurden Proben entnommen und hinsichtlich ihres pH-Werts, Trockensubstanzgehalts, Stickstoffgehalts und Proteingehalts analysiert; die Ergebnisse sind in Tabelle 6 angeführt.

Die getrockneten Maiskleber wurden im Hinblick auf ihre Aminosäurezusammensetzung, ihre Rohprotein-Verdaulichkeit sowie ihren Mykotoxingehalt analysiert, um den Einfluss der alkalischen Behandlung zu ersehen (siehe Tabellen 7 und 8). Wie erkennbar ist, hat die alkalische Behandlung keinen relevanten Effekt auf den Rohprotein-Gehalt, die Aminosäurezusammensetzung oder die Proteinverdaulichkeit - jedoch geht mit der alkalischen Behandlung eine deutliche Abnahme des Gesamtgehalts an T2 und HT2 um 77,2% einher.

**Tabelle 6: pH-Wert, Trockensubstanz (TS), Stickstoffgehalt sowie Proteingehalt von Proben von Maisklebern, die bei verschiedenen Prozessschritten entnommen wurden**

| **Nr.** | **Probenentnahmestelle** | **pH-Wert (-)** | **TS (Gew%)** | **Stickstoffgehalt (Gew% in Substanz)** | **Proteingehalt (Gew% in TS)** |
|---|---|---|---|---|---|
| I | Maiskleber | 3,7 | 10,4 | 0,9 | 51,3 |

| *Maiskleber mit alkalischer Behandlung* | | | | | |
|---|---|---|---|---|---|
| II | Maiskleber nach Einstellen des pH-Werts auf 4,0 | 4,1 | 13,0 | 1,0 | 50,0 |
| III | Feststoff aus Dekanter | 4,2 | 35,0 | 3,9 | 69,2 |
| IV | Überlauf aus Dekanter | 4,1 | 11,0 | 0,8 | 44,6 |
| V | Filterkuchen aus Vakuumdrehfilter | 4,1 | 31,7 | 3,3 | 64,9 |
| VI | Filtrat aus Vakuumdrehfilter | 3,9 | 5,1 | 0,3 | 35,4 |
| VII | getrockneter Maiskleber | 4,1 | 91,5 | 10,0 | 68,5 |

| *Maiskleber ohne alkalische Behandlung* | | | | | |
|---|---|---|---|---|---|
| VIII | Feststoff aus Dekanter | 4,0 | 30,2 | 3,1 | 64,5 |
| IX | Überlauf aus Dekanter | 3,7 | 8,8 | 0,8 | 59,0 |
| X | Filterkuchen aus Vakuumdrehfilter | 3,9 | 31,5 | 3,3 | 65,6 |
| XI | Filtrat aus Vakuumdrehfilter | 3,7 | 3,2 | 0,3 | 53,9 |
| XII | getrockneter Maiskleber | 4,0 | 90,7 | 9,4 | 64,9 |

**Tabelle 7: Einfluss der alkalischen Behandlung auf die Aminosäurezusammensetzung in den getrockneten Maisklebern, sowie Verdaulichkeit des Maisproteins**

| **Parameter** | **Einheit** | **Nr. XII (ohne alkalische Behandlung)** | **Nr. VII (nach alkalischer Behandlung)** |
|---|---|---|---|
| Fermentlösbares Rohprotein | Gew% in Substanz | 61,60 | 59,70 |
| Rohprotein-Verdaulichkeit | Gew% | 93,47 | 95,67 |
| Lysin | Gew% in Substanz | 1,05 | 0,89 |
| Methionin | Gew% in Substanz | 1,50 | 1,40 |
| Cystein | Gew% in Substanz | 1,14 | 0,86 |
| Asparaginsäure | Gew% in Substanz | 3,83 | 3,50 |
| Threonin | Gew% in Substanz | 2,22 | 2,04 |
| Serin | Gew% in Substanz | 3,25 | 2,98 |
| Glutaminsäure | Gew% in Substanz | 14,70 | 14,30 |
| Prolin | Gew% in Substanz | 6,57 | 6,07 |
| Glycin | Gew% in Substanz | 1,91 | 1,76 |
| Alanin | Gew% in Substanz | 5,84 | 5,62 |
| Valin | Gew% in Substanz | 3,17 | 2,98 |
| Isoleucin | Gew% in Substanz | 2,68 | 2,49 |
| Leucin | Gew% in Substanz | 10,60 | 10,10 |
| Tyrosin | Gew% in Substanz | 3,32 | 3,18 |
| Phenylalanin | Gew% in Substanz | 3,97 | 3,78 |
| Histidin | Gew% in Substanz | 1,60 | 1,45 |
| Arginin | Gew% in Substanz | 2,12 | 1,84 |

**Tabelle 8: T2- und HT2-Gehalt in den getrockneten Maisklebern mit und ohne vorangegangene alkalische Behandlung**

| **Mykotoxin** | **Nr. XII (ohne alkalische Behandlung) (PPb)** | **Nr. VII (nach alkalischer Behandlung) (PPb)** |
|---|---|---|
| T2 | 83,1 | 24,5 |
| HT2 | 104,0 | 37,8 |

### Beispiel 4 - Vergleich von Eigenschaften unbehandelter und alkalisch behandelter Maiskleber

Die folgenden drei Versuche wurden mit frischem Maiskleber jeweils doppelt durchgeführt. Für Versuch 1 (V1) wurden 750 ml Maiskleber in einem Rührbehälter vorgelegt, der pH-Wert wurde bestimmt, und eine Temperatur von 45 °C wurde eingestellt.

Für Versuch 2 (V2) wurden 750 ml Maiskleber in einem Rührbehälter vorgelegt, der pH-Wert wurde bestimmt, eine Temperatur von 50 °C wurde eingestellt, der pH-Wert wurde mit Natriumhydroxid auf 8,0 eingestellt, bei 50 °C wurde für 3 h gerührt und anschließend auf 45 °C abgekühlt, der pH-Wert wurde mit Schwefelsäure auf 4,0 eingestellt.

Für Versuch 3 (V3) wurden 750 ml Maiskleber in einem Rührbehälter vorgelegt, der pH-Wert wurde bestimmt, eine Temperatur von 50 °C wurde eingestellt, der pH-Wert wurde mit Natriumhydroxid auf 11,0 eingestellt, bei 50 °C wurde für 3 h gerührt und anschließend auf 45 °C abgekühlt, der pH-Wert wurde mit Schwefelsäure auf 4,0 eingestellt.

Der unbehandelte Maiskleber (V1) sowie die alkalisch behandelten Maiskleber (V2 und V3) wurden anschließend entwässert (mittels eines Büchner-Trichters) und in einem Trockenschrank getrocknet (bei maximal 90 °C). Die folgenden Analysen wurden an den Maisklebern durchgeführt: Bestimmung des Trockensubstanzgehalts (TS), des Stickstoffgehalts, der Stickstofflöslichkeit, des Fettgehalts, des Aschegehalts (bei 500 und 800 °C), der Farbe (L*a*b*), des Abnutschverhaltens (Abnutschzeit und Zeit bis Rissbildung), der Quellung, sowie des Gehalts an Mykotoxinen.

Die Ergebnisse sind in den Tabellen 9-11 angeführt und zeigen einen deutlichen Unterschied zwischen dem unbehandelten Maiskleber und den alkalisch behandelten Maisklebern. Die Unterschiede nehmen mit steigendem pH-Wert der alkalischen Behandlung zu. Bei der Entwässerung erkennt man die Unterschiede an der Rissbildung: Bei einer alkalischen Behandlung bei einem pH-Wert von 11,0 (V3) tritt keine Rissbildung auf, und der Kuchen-TS ist vergleichsweise gering (siehe Tabellen 9 und 10). Dass keine Rissbildung auftritt, ist auch aus Fig. 4 ersichtlich, welche ein Foto des entwässerten Maisklebers gemäß V3 im Büchner-Trichter zeigt. Bei den getrockneten Maisklebern zeigt sich, dass die Stickstofflöslichkeit und der Aschegehalt bei alkalisch behandelten Maisklebern (V2, V3) höher sind, und mit steigendem pH-Wert der alkalischen Behandlung weiter zunehmen (siehe Tabelle 9). Auch zeigen alkalisch behandelte Maiskleber eine stärkere Quellung und einen höheren L-Wert, d.h. einen verbesserten Helligkeitswert (siehe Tabelle 10). Auch kann durch die alkalische Behandlung der Mykotoxingehalt, insbesondere der Gehalt an T2 und HT2, signifikant reduziert werden (siehe Tabelle 11).

**Tabelle 9: Trockensubstanzgehalt (TS), Stickstoffgehalt, Stickstofflöslichkeit, Fettgehalt und Aschegehalt unbehandelter und alkalisch behandelter Maiskleber**

| **Versuch** | **TS Kuchen/trocken (Gew%)** | **Stickstoffgehalt (Gew%)** | **Stickstofflöslichkeit (Gew%)** | **Fettgehalt (Gew% in Substanz)** | **Aschegehalt bei 800 °C (Gew% in TS)** | **Aschegehalt bei 500 °C (Gew% in TS)** |
|---|---|---|---|---|---|---|
| V1 | 43,2/93,7 | 10,2 | 0,9 | 9,7 | 1,5 | 1,5 |
| V2 | 37,7/87,7 | 10,1 | 1,1 | 8,7 | 2,8 | 2,7 |
| V3 | 25,2/88,9 | 9,7 | 1,8 | 8,6 | 6,9 | 6,7 |

**Tabelle 10: Quellung, Farbe und Abnutschverhalten unbehandelter und alkalisch behandelter Maiskleber**

| **Versuch** | **Quellung (mL)** | **Farbe: L* (-)** | **Farbe: a* (-)** | **Farbe: b* (-)** | **Abnutschzeit (min:sec)** | **Zeit bis Rissbildung (min:sec)** |
|---|---|---|---|---|---|---|
| V1 | 24,8 | 68,2 | 7,0 | 41,0 | 01:04 | 01:47 |
| V2 | 26,0 | 71,5 | 5,2 | 45,4 | 01:14 | 06:47 |
| V3 | 34,2 | 75,2 | 4,3 | 44,3 | 01:30 | - |

**Tabelle 11: Mykotoxingehalt unbehandelter und alkalisch behandelter Maiskleber**

| **Versuch** | **Summe FUM (ppb)** | **DON (ppb)** | **ZON (ppb)** | **Summe T2 + HT2 (ppb)** | **Summe AFLA (ppb*100)** | **OTA (ppb*100)** |
|---|---|---|---|---|---|---|
| V1 | 972,0 | 336,0 | 908,0 | 102,7 | 97,0 | 116,0 |
| V2 | 806,0 | 56,0 | 784,0 | 87,2 | 101,0 | 83,0 |
| V3 | 872,0 | 278,0 | 605,0 | 8,5 | 87,0 | 40,0 |

### Methoden

### (1) Ermittlung des Trockensubstanzgehalts von pflanzenbasierten Klebern

Eine vorgetrocknete Petrischale wird abgewogen. Etwa 5 g Probe eines pflanzenbasierten Klebers werden in der Schale eingewogen. Die Probe wird bei 105 °C im Trockenschrank über Nacht getrocknet und anschließend in einem Exsikkator gekühlt. Danach wird die Probe wieder abgewogen, und über den Gewichtsverlust wird der Trockensubstanzgehalt berechnet. Durchgeführt wird die Methode mindestens in Doppelbestimmung.

### (2) Ermittlung des Stickstoffgehalts und der Stickstofflöslichkeit von pflanzenbasierten Klebern

Der Stickstoffgehalt der Probe wird mittels der Dumas-Methode mit dem Makro Analysator FP928 (Leco, Deutschland) bestimmt. Dabei werden je nach Stickstoffgehalt 0,1 bis 2 g Probe in ein Keramikschiffchen eingewogen und unter Sauerstoffzufuhr verbrannt. Die Verbrennungsgase werden durch einen thermoelektrischen Kühler geleitet, um Feuchtigkeit zu entziehen, und in einem thermostatisch gesteuerten Ballastvolumen gesammelt, ausgeglichen und gemischt. Ein Aliquot des Gases wird entnommen und durch ein beheiztes, mit Kupfer gefülltes Reduktionsrohr geleitet, um Stickoxide (NOx) in Stickstoff (N₂) umzuwandeln und überschüssigen Sauerstoff zu entfernen. Kohlendioxid (CO₂) wird mittels Lecosorb (Leco) und Wasser (H₂O) per Anhydrone (Magnesiumperchlorat) entfernt. Die Detektion erfolgt durch einen Wärmeleitfähigkeitsdetektor gegen Helium. Die Mehrpunktkalibration erfolgt durch externe Standards mit EDTA.

Die Methode zur Bestimmung der Stickstofflöslichkeit basiert auf einer wässrigen Extraktion der Proteine. Dabei werden unterschiedliche pH-Werte getestet, um das Löslichkeitsoptimum der jeweiligen Probe bestimmen zu können. Die Löslichkeit wird mittels Nitrogen Solubility Index (NSI) bestimmt, welcher den Stickstoffgehalt des Überstandes auf den Stickstoffgehalt der Gesamtprobe bezieht.

### (3) Ermittlung des Proteingehalts von pflanzenbasierten Klebern

Der Proteingehalt entspricht näherungsweise dem Stickstoffgehalt (siehe Methode 2) multipliziert mit 6,25.

### (4) Ermittlung der Viskosität von pflanzenbasierten Klebern

Die Ermittlung der Viskosität erfolgt mit einem Brookfield Viskosimeter. 250 mL einer Probe eines pflanzenbasierten Klebers in Suspension werden in ein 400 mL Becherglas eingefüllt. Eine für die Viskosität passende Spindel (Auslastung zwischen 10% und 90%) wird bis zur Markierung in die Probe eingetaucht. Es wird bei 50 rpm am Viskometer bei 50 °C bis zum Erreichen einer konstanten Viskosität gemessen.

### (5) Ermittlung des Mykotoxingehalts von pflanzenbasierten Klebern

Die Mykotoxine werden nach der Dilute & Shoot-Methode mittels HPLC-ESI-MS/MS unter Verwendung des Stable Isotope Dilution Assay (SIDA) quantifiziert. Bei diesem Verfahren werden ¹³C-markierte Standards dem Extrakt zugesetzt und dienen als interner Standard zur Korrektur von Matrixeffekten. Die gemahlene Probe wird mit einem methanolischen Extraktionsmittel (80% Methanol, 20% H₂O, versetzt mit 0,4% Ameisensäure und 5 mM Ammoniumformiat) unter Rühren für 30 Minuten extrahiert und anschließend zentrifugiert. Dem Extrakt wird ein interner Standard zugesetzt. Dieser enthält für jeden Analyten die entsprechende ¹³C-markierte Substanz. Durch weitere Verdünnung wird eine Methanolkonzentration von 32% eingestellt. Die in dieser Lösung enthaltenen Mykotoxine werden mittels HPLC auf einer Nucleodur-Sphinx-Säule (Macherey-Nagel, Deutschland) und einem Laufmittel auf Methanolbasis getrennt. Die Detektion erfolgt mittels Triple-Quadrupol-MS. Als Analysegeräte dienen eine Vanquish Flex Binary mit temperierbarem Autosampler und Säulenofen sowie ein gekoppeltes TSQ Quantis Triple Quadrupol Mass Spectrometer (beide Thermo Fisher Scientific, USA).

### (6) Ermittlung der Quellung von pflanzenbasierten Klebern

Die Quellung von pflanzenbasierten Klebern ergibt sich aus der Sedimentationshöhe in einem Messzylinder nach einer definierten Quellzeit. Dazu werden 10 g Kleber mit entionisiertem Wasser auf 50 g in einem 100 mL Becherglas aufgefüllt, wodurch man eine 20%-ige Suspension erhält, und für 20 min bei Raumtemperatur (ca. 23 °C) auf einem Magnetrührer mithilfe eines Rührmagneten gerührt. Danach wird der Rührmagnet entfernt und die Suspension in einen 50 mL Messzylinder übergeführt. Nach genau 10 min Absetzzeit wird die Höhe des Sediments am Messzylinder in mL abgelesen, diese Höhe entspricht der Quellung.

### (7) Ermittlung der Farbe von pflanzenbasierten Klebern

Der Helligkeitswert (L*-Wert) sowie die a*- und b*-Werte wurden nach EN ISO 1164-4 (CIE 15:2004) bestimmt. Der Mittelwert aus vier Messungen wurde gebildet, wobei eine 2 cm hohe Schicht des pflanzenbasierten Klebers in einem Behälter verwendet wurde. Zwischen den vier Messungen wurde der Behälter um jeweils 90° gedreht. Die Messung erfolgte mit einem Datacolor 650 (Datacolor, Schweiz). Es wurde mit Kugelgeometrie d/8°, mit Glanzeinschluss (SCI) und Normlichtart D65 in Kombination mit dem CIE 1963 10°-Normbeobachter gemessen.

### (8) Ermittlung des Abnutschverhaltens von pflanzenbasierten Klebern

Ein flüssiger Maiskleber wird mittels einer Rührplatte homogenisiert und auf Raumtemperatur (ca. 23 °C) gebracht. Bei Vorliegen von getrocknetem Maiskleber wird eine Suspension mit der gewünschten Konzentration, z.B. 10%-ig, hergestellt. Ein Büchner-Trichter wird luftdicht auf einer Saugflasche aufgesetzt, und die Saugflasche wird an einer Pumpe angeschlossen. Ein Filter wird in den Büchner-Trichter gelegt und mit etwas Deionat angefeuchtet. 200 g des Maisklebers werden in ein 250 mL Becherglas eingewogen und in den Filter überführt. Die Pumpe wird eingeschaltet und die Zeit gestoppt. Die Zeit, bis an der Oberfläche keine Flüssigkeit mehr zu erkennen ist, entspricht der Filtrationszeit ("Abnutschzeit"). Sobald Risse im Filterkuchen zu erkennen sind, ist der zweite Messpunkt erreicht ("Zeit bis Rissbildung").

## Patentansprüche

1. Verfahren zur Herstellung eines pflanzenbasierten Klebers mit einem reduzierten Gehalt an T-2-Toxin (T2) und/oder HT-2-Toxin (HT2), umfassend die Schritte:
(a) Bereitstellung eines Ausgangsmaterials, das T2 und/oder HT2 enthält,
(b) alkalische Behandlung des Ausgangsmaterials bei einem pH-Wert von 9,0 oder darüber, wobei der Gehalt an T2 und/oder HT2 um 50 Gew% oder mehr reduziert wird,
(c) Einstellung des pH-Werts des alkalisch behandelten Ausgangsmaterials auf 7,5 oder darunter, und
(d) Fertigstellung des pflanzenbasierten Klebers.

2. Verfahren nach Anspruch 1, wobei der Gehalt an T2 und/oder HT2 um 80 Gew% oder mehr reduziert wird.

3. Verfahren nach Anspruch 1 oder 2, wobei der pflanzenbasierte Kleber ein Maiskleber ist.

4. Verfahren nach einem der Ansprüche 1 bis 3, wobei das Ausgangsmaterial bei einem pH-Wert im Bereich von 10,0 bis 12,0 alkalisch behandelt wird.

5. Verfahren nach einem der Ansprüche 1 bis 4, wobei das Ausgangsmaterial bei einer Temperatur von 40 °C oder darüber alkalisch behandelt wird.

6. Verfahren nach einem der Ansprüche 1 bis 5, wobei das Ausgangsmaterial für mindestens 0,5 h alkalisch behandelt wird.

7. Verfahren nach einem der Ansprüche 1 bis 6, wobei der pH-Wert in Schritt (c) auf einen Wert im Bereich von 4,0 bis 7,0 eingestellt wird.

8. Verfahren nach einem der Ansprüche 1 bis 7, wobei die Fertigstellung des Klebers eine Zentrifugation umfasst.

9. Verfahren nach einem der Ansprüche 1 bis 8, wobei das bereitgestellte Ausgangsmaterial ein weiteres Mykotoxin enthält, vorzugsweise Deoxynivalenol (DON).

10. Verfahren nach Anspruch 9, wobei der Gehalt des weiteren Mykotoxins in Schritt (b) um 40 Gew% oder mehr reduziert wird.

11. Pflanzenbasierter Kleber, erhältlich durch ein Verfahren nach einem der Ansprüche 1 bis 10, aufweisend einen Gehalt an T2 und/oder HT2 von 500 ppb oder darunter, und eine Stickstofflöslichkeit von 1,0 Gew% oder darüber.

12. Pflanzenbasierter Kleber nach Anspruch 11, aufweisend einen Gehalt an Deoxynivalenol (DON) von 500 ppb oder darunter.

13. Pflanzenbasierter Kleber nach Anspruch 11 oder 12, aufweisend einen Gehalt an Zearalenon (ZON) von 500 ppb oder darunter.

14. Pflanzenbasierter Kleber nach einem der Ansprüche 11 bis 13, weiters aufweisend einen Proteingehalt von 50 Gew% oder darüber, bezogen auf das Gesamtgewicht des pflanzenbasierten Klebers.

15. Verwendung des pflanzenbasierten Klebers nach einem der Ansprüche 11 bis 14 in der Futtermittelindustrie und/oder in der Nahrungsmittelindustrie.
